Europäisches Patentamt

(19) European Patent Office

Office européen des brevets

(11) Numéro de publication : **0 334 690 B1**

(12) # FASCICULE DE BREVET EUROPEEN

(45) Date de publication du fascicule du brevet :
13.03.91 Bulletin 91/11

(51) Int. Cl.$^5$ : **G21C 5/10, G21C 15/10**

(21) Numéro de dépôt : **89400435.7**

(22) Date de dépôt : **16.02.89**

(54) **Procédé et dispositif de limitation de l'intensité de jets parasites d'eau de refroidissement dans un réacteur nucléaire à eau sous pression.**

(30) Priorité : 04.03.88 FR 8802779
18.11.88 FR 8815027

(43) Date de publication de la demande :
27.09.89 Bulletin 89/39

(45) Mention de la délivrance du brevet :
13.03.91 Bulletin 91/11

(84) Etats contractants désignés :
BE SE

(56) Documents cités :
EP-A- 0 039 288
EP-A- 0 060 777
FR-A- 1 305 489
FR-A- 2 063 945
FR-A- 2 333 326
FR-A- 2 561 963
US-A- 4 786 465

(73) Titulaire : **FRAMATOME**
**Tour Fiat 1, Place de la Coupole**
**F-92400 Courbevoie (FR)**

(72) Inventeur : **Chevereau, Gérard**
**84 Avenue Thiers**
**F-93340 Le Raincy (FR)**
Inventeur : **Barois, Guy**
**3 rue Buffon**
**F-92600 Asnières (FR)**

(74) Mandataire : **Bouget, Lucien et al**
**Cabinet Lavoix 2, Place d'Estienne d'Orves**
**F-75441 Paris Cédex 09 (FR)**

EP 0 334 690 B1

Jouve, 18, rue Saint-Denis, 75001 PARIS

## Description

L'invention concerne un procédé et un dispositif de limitation de l'intensité de jets parasites d'eau de refroidissement dans un réacteur nucléaire à eau sous pression en service.

Les réacteurs nucléaires à eau sous pression comportent généralement un coeur constitué par des assemblages combustibles de forme prismatique disposés verticalement et juxtaposés. Le coeur est placé à l'intérieur de la cuve du réacteur nucléaire dans laquelle circule de l'eau de refroidissement du réacteur. Le coeur est entouré par un cloisonnement qui épouse étroitement la forme de sa surface périphérique et assure son maintien à l'intérieur d'une enveloppe de coeur de forme cylindrique à axe vertical. Le cloisonnement comporte des plaques verticales placées à angle droit les unes par rapport aux autres et reproduisant la forme extérieure du coeur ainsi que des renforts constitués par des plaques horizontales disposées à intervalles réguliers suivant la hauteur du coeur, dans un espace annulaire ménagé entre la périphérie du coeur et la surface intérieure de l'enveloppe de coeur.

Dans les réacteurs nucléaires à eau sous pression de type le plus courant construits jusqu'ici, de l'eau de refroidissement pénètre dans l'enveloppe de coeur par un ou plusieurs orifices prévus dans sa partie supérieure et circule de haut en bas dans l'espace annulaire entourant le coeur, les plaques de renfort horizontales du cloisonnement étant percées à l'exclusion de la plaque située le plus haut et disposée au-dessus de l'orifice de l'enveloppe de coeur, qui constitue le renfort supérieur. L'eau de refroidissement circule à l'intérieur du coeur dans la direction verticale et de bas en haut. De part et d'autre du cloisonnement, l'eau de refroidissement circule donc dans des sens opposés. D'autre part, cette eau de refroidissement en circulation subit des pertes de charges, en particulier à l'intérieur des assemblages du coeur, au niveau de grilles ou plaques entretoises assurant le maintien des crayons combustibles. Il existe donc une différence de pression de part et d'autre des plaques verticales du cloisonnement qui s'annule en partie basse du coeur où le courant d'eau de refroidissement pénètre dans le coeur et qui est maximale à la partie supérieure du coeur, l'eau de refroidissement en circulation ayant alors subi la perte de charge maximale.

Les plaques verticales du cloisonnement sont d'autre part rapportées à angle droit les unes par rapport aux autres, sans que la zone de jonction soit obturée de manière étanche. Il subsiste donc généralement un interstice entre deux plaques de cloisonnement successives, cet interstice mettant en communication l'espace annulaire à la périphérie du cloisonnement, avec le coeur disposé à l'intérieur du cloisonnement.

Du fait de la différence de pression existant entre les deux côtés des parois verticales du cloisonnement, des jets d'eau de refroidissement parasites apparaissent, lorsque le réacteur nucléaire est en service. Ces jets d'eau parasites sont dirigés dans le sens allant de l'espace annulaire autour du cloisonnement vers l'intérieur du coeur et sont susceptibles de venir frapper les crayons combustibles des assemblages disposés à proximité des zones de raccordement des cloisons. Ces jets entraînent des vibrations des crayons qui sont préjudiciables à leur bonne tenue en service.

Dans les réacteurs nucléaires de conception plus récente, on a cherché à réduire ou à éliminer ces jets parasites, en réduisant ou en annulant la pression différentielle de part et d'autre de la cloison ou même en rendant cette différence de pression négative.

Pour cela, on a modifié légèrement la structure et la conception de l'enveloppe de coeur et du cloisonnement pour obtenir une circulation de l'eau de refroidissement du réacteur dirigée de bas en haut, aussi bien dans le coeur que dans l'espace annulaire situé à la périphérie du cloisonnement. L'enveloppe de coeur ne comporte pas d'orifice à sa partie supérieure et le renfort supérieur horizontal du cloisonnement est percé pour permettre le passage de l'eau de refroidissement, à la partie supérieure de l'espace annulaire. Les renforts horizontaux du cloisonnement sont disposés en coïncidence avec les plaques entretoises des assemblages du coeur et ces renforts sont percés de façon que l'eau de refroidissement circulant dans l'espace annulaire subisse une perte de charge au passage des renforts équivalente à la perte de charge subie par l'eau en circulation dans le coeur, au passage des plaques entretoises des assemblages.

De plus, les cloisons verticales sont percées à différents niveaux suivant la hauteur du coeur. De cette façon, l'eau de refroidissement est parfaitement en équipression de part et d'autre des plaques du cloisonnement, sur toute la hauteur du coeur.

Dans le cas des réacteurs nucléaires de conception plus ancienne qui ont été mis en service et utilisés suivant le principe de la circulation de l'eau de refroidissement à contre-courant de part et d'autre du cloisonnement, on a prévu une intervention permettant de faire circuler l'eau de refroidissement dans le même sens de part et d'autre du cloisonnement du coeur. Cette invention consiste à boucher le ou les orifices situés à la partie supérieure de l'enveloppe de coeur et à percer le renfort supérieur du cloisonnement. Cet état de la technique est illustré par FRA 2561963 et par US.A 4786465.

Une telle intervention apporte une amélioration certaine du fonctionnement du réacteur, par une réduction de l'intensité des jets parasites d'eau de refroidissement à travers le cloisonnement. Cependant, il subsiste malgré tout des zones, en particulier dans la partie basse du coeur, où la pression dans l'espace annulaire à la périphérie du cloisonnement est supérieure à la pression à l'intérieur du coeur. Ceci est dû en particulier au fait que les renforts ne sont généralement pas disposés au même niveau que les grilles des assemblages du coeur.

Dans le cas où le jeu entre les cloisons est relativement fort, et par exemple supérieur à 0,4 mm, les jets parasites d'eau de refroidissement présentent localement une intensité supérieure aux limites généralement admises. Dans ce cas, il est nécessaire de réduire le jeu entre les cloisons, soit par une opération de martelage du joint, soit par un vissage des parties des cloisons en coïncidence.

De telles opérations doivent être réalisées sous eau pendant une période d'arrêt du réacteur et requièrent l'utilisation de moyens conçus spécialement.

Le but de l'invention est donc de proposer un procédé de limitation de l'intensité de jets parasites d'eau de refroidissement dans un réacteur nucléaire à eau sous pression en service, le réacteur comportant un coeur constitué par des assemblages combustibles juxtaposés et entouré à sa périphérie par un cloisonnement comportant des plaques verticales entre lesquelles subsistent des interstices constituant des passages pour les jets d'eau parasites à travers le cloisonnement, vers l'intérieur du coeur, et des plaques de renfort horizontales disposées à différents niveaux entre les plaques verticales et une enveloppe de coeur cylindrique à axe vertical entourant le cloisonnement et ménageant un espace annulaire autour des plaques verticales, dans lequel sont placés les renforts qui sont percés de façon que l'eau de refroidissement circule de bas en haut, aussi bien dans le coeur, à l'intérieur du cloisonnement, que dans l'espace annulaire, ce procédé permettant de réduire ou même d'annuler les jets parasites, quel que soit le jeu entre les cloisons et quelle que soit la disposition des renforts du cloisonnement, dans un réacteur nucléaire existant.

Dans ce but, on introduit et on met en place, pendant un arrêt du réacteur, par les ouvertures du renfort situé le plus haut, ou renfort supérieur, des dispositifs d'obturation partielle d'une partie au moins des ouvertures des renforts situés en-dessous du renfort supérieur, les dispositifs d'obturation restant en place après le redémarrage du réacteur, pour augmenter et régler les pertes de charge de l'eau de refroidissement circulant dans l'espace annulaire.

L'invention est également relative à des dispositifs d'obturation partielle des ouvertures des renforts du cloisonnement, permettant d'assurer une limitation de l'intensité des jets parasites d'eau de refroidissement.

Afin de bien faire comprendre l'invention, on va maintenant décrire, à titre d'exemples non limitatifs, en se référant aux figures jointes en annexe, plusieurs mode de réalisation du procédé suivant l'invention comparativement aux procédés suivant l'art antérieur utilisés pour réduire les jets parasites dans un réacteur nucléaire à eau sous pression.

La figure 1 est une demi-vue en coupe par un plan vertical du cloisonnement du coeur d'un réacteur nucléaire suivant une conception entraînant une circulation à contre-courant de l'eau de refroidissement de part et d'autre du cloisonnement.

La figure 2 est une courbe représentant la variation de la différence de pression de part et d'autre du cloisonnement représenté sur la figure 1, suivant la hauteur du coeur.

Les figures 3 et 4 sont des vues à grande échelle, en coupe par un plan horizontal, de deux zones de jonction entre des plaques verticales d'un cloisonnement, dans le cas d'un coeur de réacteur constitué par des assemblages d'un premier type et d'un second type.

La figure 5 est une demi-vue en coupe par un plan vertical d'un cloisonnement d'un coeur de réacteur nucléaire à eau sous pression d'une conception entraînant une circulation de l'eau de refroidissement dans le même sens, de part et d'autre du cloisonnement.

Les figures 6 et 7 sont des vues en perspective éclatée du cloisonnement d'un réacteur nucléaire à eau sous pression, avant et après une opération de conversion permettant de modifier le fonctionnement du réacteur, en ce qui concerne le sens de circulation de l'eau de refroidissement.

La figure 8 représente les courbes de variation de la différence de pression de part et d'autre du cloisonnement, avant et après la conversion représentée sur les figures 6 et 7 respectivement.

La figure 9 est une vue en coupe par un plan vertical, d'un dispositif d'obturation partielle des ouvertures du renfort d'un cloisonnement permettant de mettre en oeuvre le procédé suivant l'invention.

La figure 10 représente des courbes de variation de la pression suivant la hauteur du coeur d'un réacteur nucléaire, de part et d'autre du cloisonnement, après une opération de conversion telle que représentée sur les figures 6 et 7.

La figure 11 est une vue en coupe verticale d'une première variante de réalisation d'un dispositif d'obturation partielle suivant l'invention.

La figure 12 est une vue suivant 12-12 de la figure 11.

La figure 13 est une vue en coupe verticale d'une seconde variante de réalisation d'un dispositif d'obturation partielle suivant l'invention.

La figure 14 est une vue en coupe verticale d'une troisième variante de réalisation d'un dispositif d'obturation partielle suivant l'invention.

La figure 15 est une vue suivant 15-15 de la figure 14.

La figure 16 est une vue en coupe verticale d'une variante de réalisation du moyen d'appui d'un dispositif d'obturation tel que représenté sur la figure 9.

La figure 17 est une vue en coupe verticale d'une quatrième variante de réalisation d'un dispositif d'obturation partielle suivant l'invention.

La figure 18 est une vue en coupe verticale du dispositif représenté sur la figure 17, lors de sa mise en place à l'aide d'un outillage approprié.

La figure 19 est une vue en coupe partielle par un plan horizontal du cloisonnement du coeur d'un réacteur nucléaire à eau sous pression sur lequel on a effectué une conversion downflow-upflow.

La figure 20A est une vue en coupe suivant 20-20 de la figure 19, de la partie inférieure d'un dispositif d'obturation suivant l'invention et suivant une cinquième variante de réalisation.

La figure 20B est une vue en coupe suivant 20-20 de la figure 19, de la partie supérieure du dispositif d'obturation suivant la cinquième variante de réalisation.

Les figures 21, 22 et 23 sont des vues en coupe suivant 21-21, 22-22 et 23-23 respectivement des figures 20A et 20B.

La figure 24 est une vue en coupe partielle du cloisonnement de la figure 19 par un plan horizontal, au-dessus du renfort supérieur.

Les figures 25A et 25B sont des demi-vues en coupe par un plan vertical de symétrie d'un bouchon de fixation d'une tige d'obturation suivant la cinquième variante de réalisation, au niveau du renfort supérieur du cloisonnement, en position verrouillée et en position déverrouillée, respectivement.

La figure 26 est une vue en coupe par un plan vertical de symétrie d'un dispositif de maintien de la partie supérieure d'une tige d'obturation suivant l'invention.

La figure 27 est une vue générale d'un réacteur nucléaire à eau sous pression, dans le cloisonnement duquel on réalise la mise en place de tiges d'obturation, par un procédé suivant l'invention.

La figure 28 est une vue à plus grande échelle montrant un tube de guidage permettant de mettre en oeuvre le procédé d'obturation suivant l'invention.

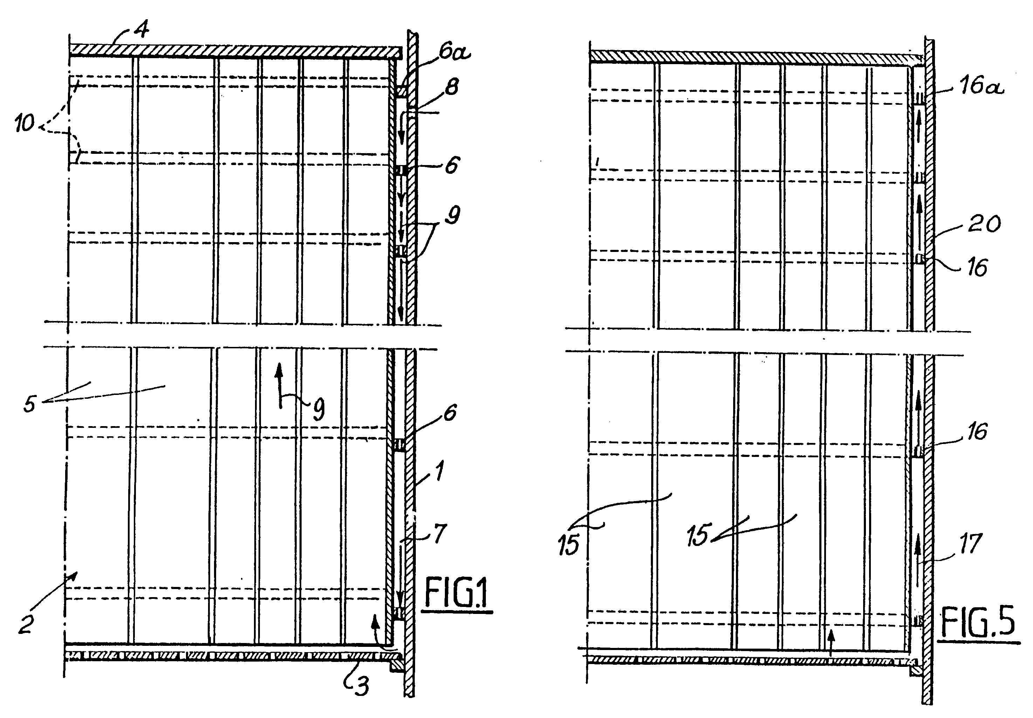

Sur la figure 1, on voit l'enveloppe de coeur 1 d'un réacteur nucléaire à eau sous pression à l'intérieur de laquelle est disposé le cloisonnement 2 destiné à délimiter latéralement le coeur du réacteur dont les assemblages reposent sur la plaque inférieure de coeur 3.

Une plaque supérieure de coeur 4 repose sur la partie supérieure des assemblages. Les plaques 3 et 4 sont percées de manière à permettre le passage du fluide de refroidissement du coeur.

Le cloisonnement 2 est constitué par des plaques verticales planes 5 disposées à angle droit les unes par rapport aux autres et délimitant un contour polygonal correspondant au contour du coeur. Le cloisonnement 2 comporte également des plaques de renfort 6 disposées suivant la hauteur du coeur, à des intervalles variables. Les plaques 6 ont un bord extérieur circulaire correspondant à la section interne de l'enveloppe 1 et un bord intérieur découpé suivant la forme d'un polygone correspondant à la forme de la section du coeur. Les renforts horizontaux 6 sont disposés suivant la largeur de l'espace annulaire 7 ménagé entre la surface externe des cloisons 5 et la surface interne de l'enveloppe de coeur 1.

L'enveloppe de coeur 1 comporte dans sa partie supérieure, en-dessous du renfort supérieur 6a, un orifice 8 par lequel pénètre l'eau de refroidissement, lorsque le réacteur est en fonctionnement.

L'eau de refroidissement circule de haut en bas dans l'espace annulaire 7 puis de bas en haut à l'intérieur du coeur (flèches 9). Lors de sa circulation vers le haut dans le coeur, l'eau de refroidissement traverse les plaques entretoises des assemblages combustibles du coeur dont la position a été représentée sur la figure 1 (repères 10).

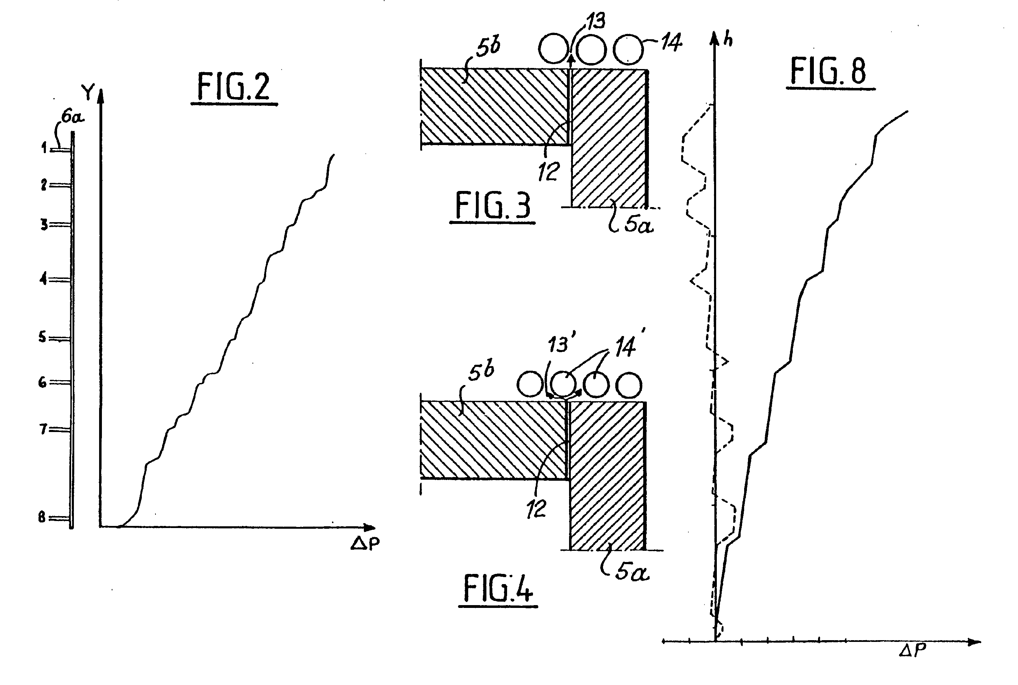

Sur la figure 2, on a représenté les variations, suivant la hauteur du coeur, de la différence de pression ΔP du fluide de refroidissement, de part et d'autre des plaques verticales 5 du cloisonnement. On a représenté dans la partie gauche de la figure 2, la position des renforts successifs 6 du cloisonnement ainsi que la position du renfort supérieur 6a, suivant la direction Y correspondant à la hauteur du coeur.

La différence de pression ΔP de part et d'autre des plaques verticales 5 du cloisonnement augmente de manière irrégulière mais cependant continue, de la partie inférieure du coeur jusqu'à la partie supérieure. A la partie inférieure du coeur, le flux descendant d'eau de refroidissement rencontre le flux ascendant et la différence de pression ΔP est nulle. Cette différence de pression ΔP est maximale à la partie supérieure du coeur, au voisinage du renfort 6a.

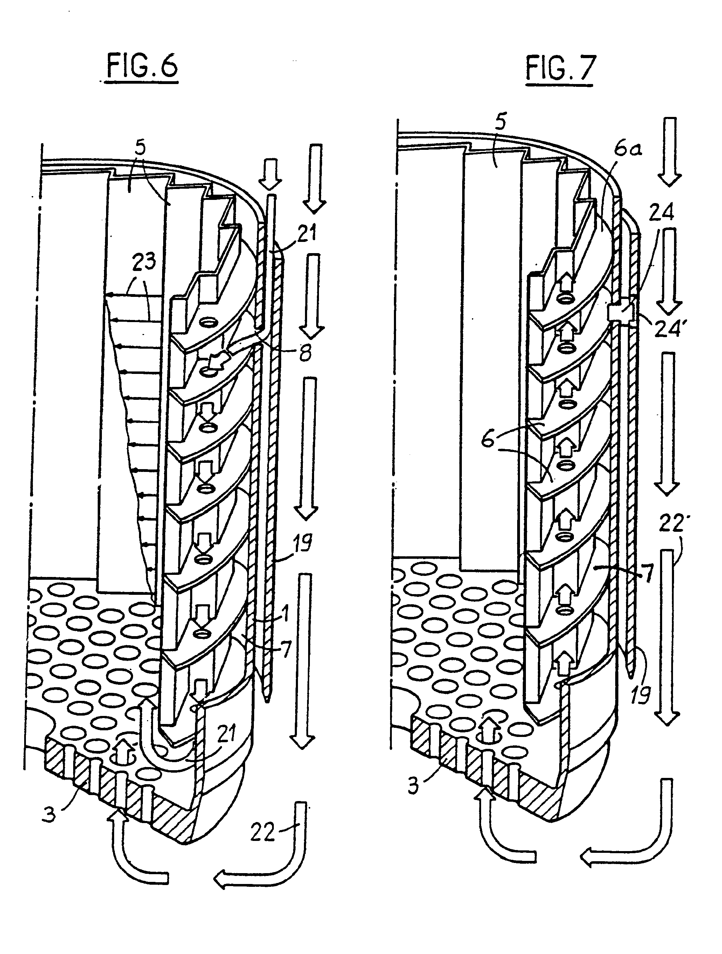

Sur les figures 3 et 4, on voit deux plaques verticales 5a, 5b du cloisonnement du coeur représenté sur la figure 1. Ces plaques sont représentées en coupe par un plan horizontal et au voisinage de leur zone de jonction. Un interstice 12 subsiste entre les plaques 5a et 5b, si bien qu'un jet parasite de fluide de refroidissement 13 (figure 3) ou 13' (figure 4) est dirigé depuis l'extérieur du cloisonnement vers l'intérieur du coeur, lorsqu'il existe une différence de pression ΔP entre les deux faces des plaques 5a et 5b.

Comme il est visible sur la figure 2, cet effet est particulièrement marqué dans la partie supérieure du coeur.

Dans le cas de la figure 3, les crayons combustibles des assemblages sont disposés de manière que le jet 13 ne frappe directement aucun crayon combustible 14. Au contraire, dans le cas de la figure 4, les assemblages combustibles sont disposés de telle manière que le jet 13' vient frapper directement un crayon combustible 14' sur une rangée externe d'un assemblage.

Dans les deux cas cependant, le jet 13 ou 13' est susceptible d'engendrer une vibration des crayons qui entraîne une augmentation de leur usure en service.

Sur la figure 5, on a représenté un cloisonnement du coeur d'un réacteur nucléaire à eau sous pression réalisé suivant une nouvelle conception permettant de réduire ou même de supprimer les jets parasites traversant le cloisonnement, pour atteindre les crayons combustibles.

Dans cette nouvelle conception, l'enveloppe de coeur 20 ne comporte pas d'orifice en partie haute et les renforts horizontaux 16 des cloisons verticales 15 sont tous percés y compris la plaque de renfort supérieure 16a, si bien que l'eau de refroidissement du réacteur circule de bas en haut, aussi bien dans l'espace annulaire 17 compris entre le cloisonnement 15 et la surface interne de l'enveloppe de coeur 20, que dans le coeur du réacteur, à l'intérieur du cloisonnement 15.

Les renforts 16 sont disposés au niveau des plaques entretoises des assemblages du coeur et sont percés de façon que la perte de charge soit sensiblement égale pour l'eau de refroidissement circulant dans l'espace annulaire 17 et pour l'eau de refroidissement circulant dans le coeur, lors de la traversée des renforts 16 et des entretoises des assemblages combustibles, respectivement.

De cette manière, l'eau de refroidissement est en équipression de part et d'autre du cloisonnement 15. De plus, des trous de passage d'eau 18 traversant les cloisons 15 dans certaines zones permettent de mettre l'eau de refroidissement parfaitement en équipression de part et d'autre du cloisonnement.

Grâce à cette conception nouvelle des réacteurs nucléaires à eau sous pression, on évite donc l'apparition de jets parasites dirigés vers l'intérieur du coeur, à travers le cloisonnement.

Cependant, pour les réacteurs nucléaires selon l'ancienne conception et qui ont été mis en service, l'effet non souhaitable des jets parasites traversant le cloisonnement subsiste.

On a donc imaginé une intervention permettant de modifier le sens de circulation de l'eau de refroidissement dans l'espace annulaire entre le cloisonnement et l'enveloppe de coeur. Les figures 6 et 7 montrent le principe de cette intervention, la figure 6 montrant la structure du cloisonnement et le sens de circulation de l'eau de refroidissement pour un réacteur selon l'ancienne conception et avant sa conversion et la figure 7 montrant la structure du cloisonnement et le sens de circulation de l'eau de refroidissement dans le même réacteur, après une intervention permettant de réaliser la conversion du réacteur pour obtenir une circulation de l'eau de refroidissement de bas en haut, dans l'espace annulaire à la périphérie du cloisonnement.

Les éléments correspondants sur la figure 1 d'une part et sur les figures 6 et 7 d'autre part portent les mêmes repères.

Le configuration représentée sur la figure 6 correspond sensiblement à la configuration de la figure 1, l'enveloppe de coeur 1 comportant un orifice 8 dans sa partie supérieure et le renfort supérieur 6a du cloisonnement ne comportant pas de trous de passage d'eau.

De plus, un écran thermique 19 est placé autour de l'enveloppe de coeur 1 et constitue avec celle-ci un espace annulaire dans lequel pénètre une partie du flux de l'eau de refroidissement en circulation dans la cuve (flèches 21). Ce flux d'eau de refroidissement 21 pénètre dans l'espace annulaire 7 compris entre les plaques verticales de cloisonnement 5 et la surface intérieure de l'enveloppe de coeur 1, par l'orifice 8. Le flux d'eau de refroidissement 21 circule ensuite dans la direction verticale et de haut en bas, à l'intérieur de l'espace annulaire 7 en traversant les renforts 6 par les orifices prévus dans ces renforts. Enfin, le flux d'eau de refroidissement 21 vient se mélanger au flux principal 22 d'eau de refroidissement à la base du cloisonnement, pour circuler ensuite dans la direction verticale et de bas en haut à l'intérieur du coeur.

Ce type de circulation de l'eau de refroidissement de haut en bas à la périphérie du cloisonnement est généralement désigné par le terme anglais "down flow". La circulation down flow, comme expliqué précédemment en référence à la figure 2, entraîne une différence de pression de part et d'autre du cloisonnement et l'apparition de jets de cloisonnement 23 particulièrement intenses dans la partie supérieure du coeur.

On a donc prévu une intervention sur le réacteur nucléaire qui permet de passer d'une circulation down flow à une circulation "up flow", c'est-à-dire une circulation dans la direction verticale et dirigée vers le haut, autour du cloisonnement, comme représenté sur la figure 7.

Pour cela, on réalise la fermeture de l'orifice 8 de l'enveloppe de coeur 1, par un bouchon 24 et un perçage du renfort supérieur 6a dans l'alignement des trous traversant les autres renforts 6.

Pour réaliser la pose du bouchon 24, on réalise par perçage un trou de passage 24' à travers l'écran thermique 19.

Dans le type de circulation up flow de l'eau de refroidissement, ce type de circulation étant également celui qui est mis en oeuvre dans le cas de la nouvelle conception représentée sur la figure 5, le flux principal 22' d'eau de refroidissement passant à l'extérieur de l'enveloppe de coeur traverse la plaque inférieure de coeur 3, se répartit à l'intérieur du coeur et dans l'espace annulaire 7 et circule en parallèle de bas en haut, dans le coeur et dans l'espace annulaire 7.

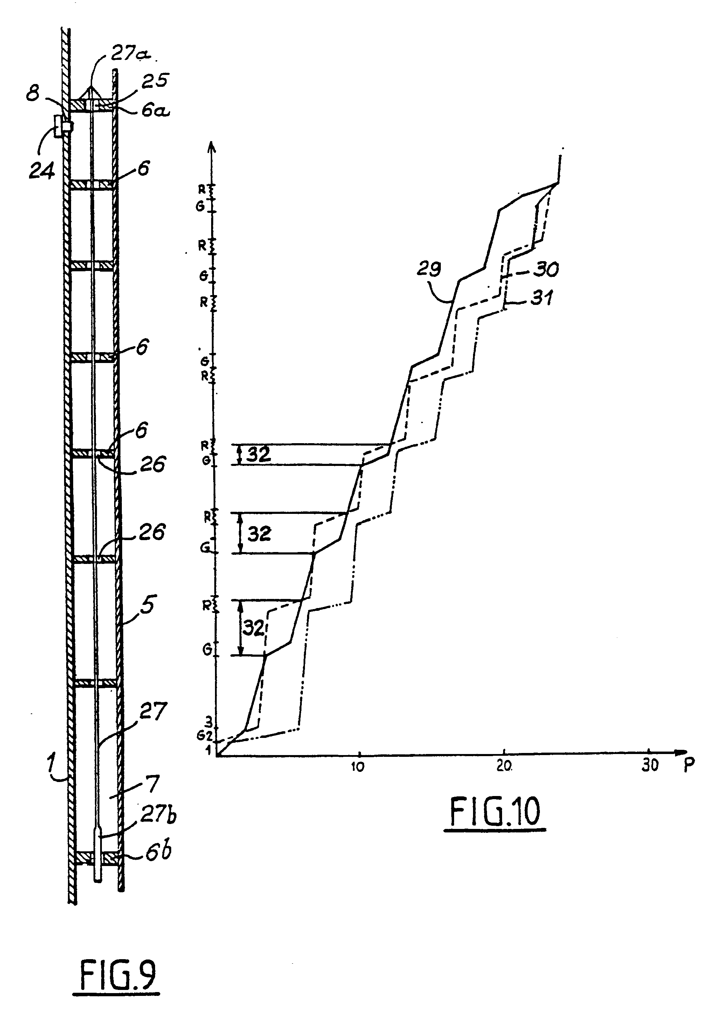

Sur la figure 8, on a représenté la différence de pression $\Delta P$ du fluide de refroidissement de part et d'autre du cloisonnement, dans le cas de la circulation down flow telle que représentée sur la figure 6 (courbe en traits pleins) et dans le cas de la circulation up flow telle que représentée sur la figure 7 (courbe en pointillés). La courbe en traits pleins de la figure 8 qui correspond sensiblement à la courbe de la figure 2 montre que la différence de pression $\Delta P$ de part et d'autre du cloisonnement augmente depuis une valeur nulle à la base du cloisonnement jusqu'à une valeur maximale à la partie supérieure du cloisonnement.

Dans le cas d'une circulation up flow de l'eau de refroidissement, les pertes de charge du fluide circulant dans l'espace annulaire à la périphérie du cloisonnement, lors de la traversée des ouvertures prévues dans les renforts, sont du même ordre que les pertes de charge subies par le fluide circulant dans le coeur, lors de la traversée des plaques entretoises des assemblages. Cependant, à la différence de la structure selon la nouvelle conception représentée sur la figure 5, les renforts 6 ne sont pas placés systématiquement au niveau des plaques entretoises des assemblages du coeur. Il en résulte, comme il est visible sur la figure 8, qu'il subsiste certaines zones où la pression de l'eau de refroidissement est plus forte dans l'espace annulaire à l'extérieur du cloisonnement qu'à l'intérieur du cloisonnement à la même altitude. Ces zones sont situées principalement dans la partie inférieure du coeur.

Lorsque le jeu entre les cloisons est faible et par exemple inférieur à 0,4 mm, les jets parasites entraînés par cette différence de pression et dirigés vers l'intéreur du coeur ont une intensité faible et bien inférieure aux critères admissibles.

Cependant, lorsque le jeu entre les cloisons a une valeur plus élevée, les jets parasites dirigés vers l'intérieur du coeur peuvent avoir une intensité telle que les crayons soient mis en vibration.

Sur la figure 9, on a représenté un dispositif permettant de mettre en oeuvre le procédé selon l'invention, de façon à limiter l'intensité des jets parasites jusqu'à une valeur très faible, suivant toute la hauteur du coeur.

Le procédé suivant l'invention est mis en oeuvre sur le cloisonnement du coeur d'un réacteur nucléaire ayant subi une intervention telle que représentée sur la figure 7 pour passer d'une circulation down flow à une circulation up flow de l'eau de refroidissement.

Les éléments correspondants sur les figures 7 et 9 portent les mêmes repères.

L'intervention sur le cloisonnement a consisté à percer le renfort supérieur 6a pour réaliser des orifices de traversée 25 de ce renfort situés chacun dans l'alignement d'une ligne d'orifices 26 traversant les renforts 6 situés en dessous du renfort 6a et à placer un bouchon de fermeture 24 dans l'orifice 8 situé à la partie supérieure de l'enveloppe de coeur 1.

Le procédé suivant l'invention consiste à augmenter la perte de charge du fluide de refroidissement lors de la traversée des orifices 26 des renforts 6, par obturation partielle de ces orifices 26. Cette obturation est réalisée par le dessus du cloisonnement en introduisant les dispositifs d'obturation par les orifices 25 du renfort supérieur 6a.

Dans le cas du mode de réalisation représenté sur la figure 9, on utilise des dispositifs d'obturation partielle constitués par la partie courante d'une tige 27 présentant une partie supérieure d'appui 27a sur le support supérieur 6a et une partie inférieure élargie 27b assurant le guidage et le lestage de la tige pendant son introduction dans le cloisonnement.

La partie supérieure d'appui 27a de la tige comporte deux ailes à 90° dont la longueur est supérieure au diamètre de l'orifice 25.

Le procédé selon l'invention est mis en oeuvre pendant un arrêt du réacteur nucléaire, la cuve de ce réacteur étant ouverte et remplie d'eau. Les tiges 27 sont approvisionnées et mises en position dans les lignes d'orifices du cloisonnement, depuis le bord de la piscine du réacteur.

Lors de la remise en fonctionnement du réacteur, les tiges 27 restent en place dans le cloisonnement où elles sont maintenues en position sous l'effet de leur propre poids.

Sur la figure 10, on a représenté l'évolution de la perte de charge de l'eau de refroidissement du réacteur, suivant la hauteur du coeur, à l'intérieur du cloisonnement, c'est-à-dire dans le coeur lui-même (courbe 29 en traits pleins) et dans l'espace annulaire à la périphérie du cloisonnement, dans le cas d'une conversion up flow sans utilisation du procédé suivant l'invention (courbe 30 en pointillés) et dans le cas d'une conversion up flow avec utilisation du procédé suivant l'invention d'obturation partielle des orifices des renforts (courbe 31 en traits mixtes).

On a de plus représenté suivant l'axe des ordonnées, les zones occupées par les renforts (zones R) et les zones occupées par les grilles (zones G).

On voit que les zones occupées par les renforts et les zones occupées par les grilles ne sont pas superposées et que la courbe 30 passe au-dessus de la courbe 29 dans certaines zones 32 situées principalement à la partie inférieure du coeur. Dans ces zones, la pression de l'eau de refroidissement est plus forte dans l'espace annulaire que dans le coeur, si bien que des jets parasites dirigés vers l'intérieur du coeur sont susceptibles de se former.

En revanche, la courbe 31 est située en-dessous de la courbe 29, l'obturation partielle des orifices 26 des renforts 6 entraînant une augmentation de la perte de charge dans le fluide de refroidissement en circulation dans l'espace annulaire, principalement au niveau des orifices 26 du renfort inférieur 6b dans lesquels sont engagées les parties élargies 27b des tiges 27.

Il est visible que le procédé suivant l'invention permet d'éviter la formation de jets parasites, principalement dans la partie inférieure du coeur, en augmentant la perte de charge du fluide de refroidissement circulant dans l'espace annulaire à la périphérie du cloisonnement.

Il est bien évident qu'on peut introduire dans les orifices 26 des renforts 6 disposés suivant une rangée verticale une tige de section variable permettant de réduire plus ou moins la section de passage des orifices 26, en fonction de la position du renfort 6 correspondant suivant la hauteur du coeur. Il est également possible de ne réaliser une réduction de section que sur certains des orifices des renforts 6.

Le procédé suivant l'invention est donc d'une grande souplesse et permet d'adapter au mieux les sections de passage des orifices des renforts et donc les pertes de charge dans l'espace annulaire à la périphérie du cloisonnement, à la section de passage et à la position des grilles entretoises dans le coeur déterminant les pertes de charges de l'eau de refroidissement circulant à l'intérieur du cloisonnement.

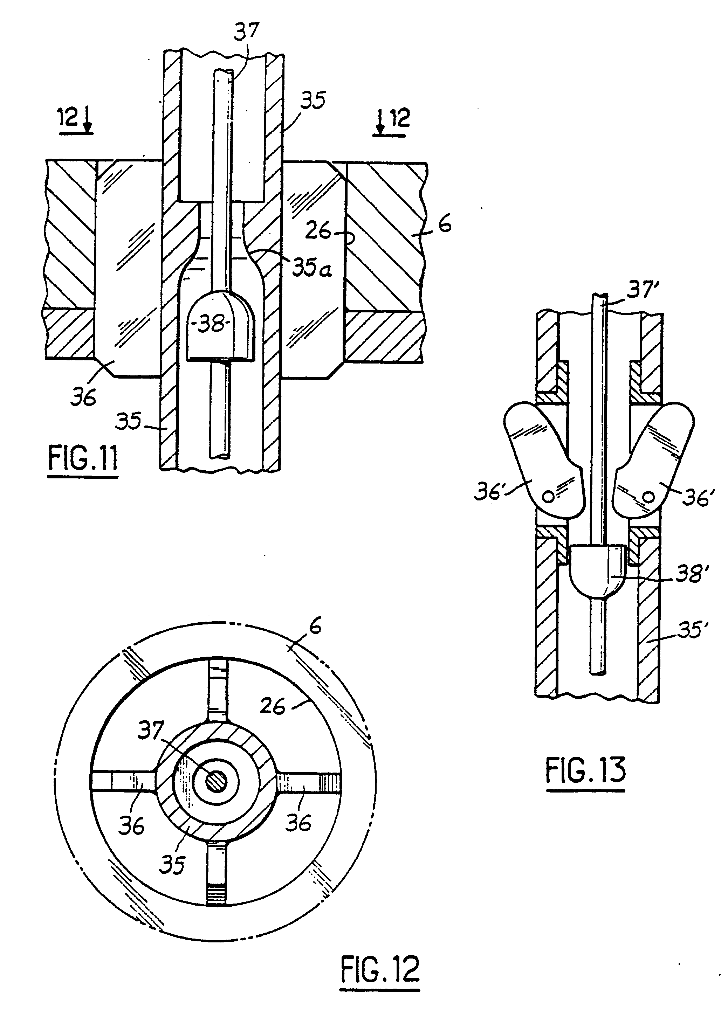

Sur les figures 11 et 12, on a représenté une variante de réalisation d'un dispositif d'obstruction partielle d'un orifice 26 d'un renfort 6 du cloisonnement d'un réacteur nucléaire ayant subi une conversion up flow.

Le dispositif de réduction de section est constitué par une tige creuse 35 munie d'ailettes de centrage 36 placées à 90° les unes des autres et constituant plusieurs jeux successifs suivant la longueur de la tige.

Les jeux successifs d'ailettes 36 sont disposés de façon à venir se placer au niveau des renforts 6, à l'intérieur des orifices 26, lorsque la tige 35 est mise en position dans le cloisonnement, de la même façon que la tige 27 représentée sur la figure 9. Les ailettes 36 ont une dimension radiale telle qu'il subsiste un très faible jeu entre leur extrémité et les bords de l'orifice 26, après mise en place de la tige 35.

Une tige de manoeuvre 37 est disposée à l'intérieur de la tige creuse 35 et comporte des parties élargies diamétralement 38 destinées à coopérer avec des parties profilées et resserrées 35a de l'alésage intérieur de la tige 35 située au niveau des jeux d'ailettes 36 pour réaliser l'expansion diamétrale de la tige 35 et des ailettes 36 à l'intérieur de l'orifice 26. On obtient ainsi une fixation irréversible de la tige 35 à l'intérieur des orifices 26 des renforts 6.

Dans le cas de la variante de réalisation représentée sur la figure 13, la tige creuse 35′ porte des doigts de centrage et de fixation 36′ articulés sur la tige 35′ au niveau de fenêtres traversant sa paroi latérale, les ensembles à doigts de centrage de la tige 35′ étant disposés de façon à venir à l'intérieur des orifices 26 des renforts 6, au moment de la mise en place de la tige 35′ dans le cloisonnement. La tige 35′ comporte suivant son axe, une tige de manoeuvre 37′ comportant un élargissement 38′ susceptible d'actionner les doigts 36′. La tige de manoeuvre 37′ est mobile axialement à l'intérieur de la tige creuse 35′ pour réaliser l'écartement des doigts de centrage et de fixation 36′ après mise en place de la tige 35′ dans le cloisonnement.

Les dispositifs représentés sur les figures 11, 12 et 13 ont l'avantage d'assurer un centrage et un maintien efficaces des dispositifs d'obstruction partielle des orifices, à l'intérieur du cloisonnement.

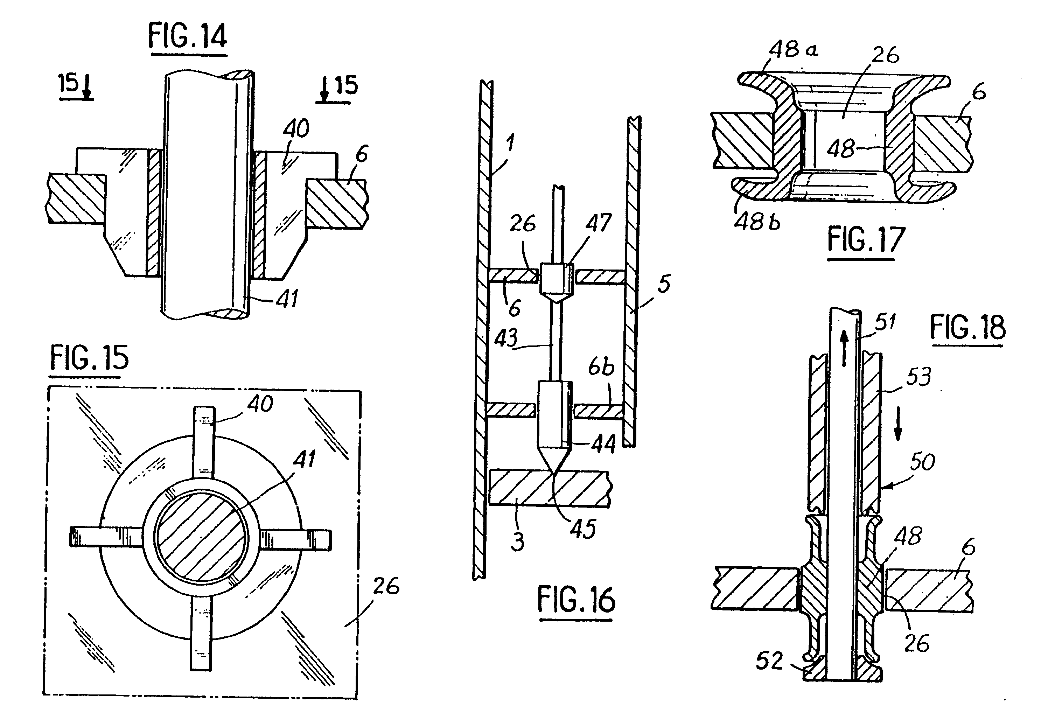

Sur les figures 14 et 15, on a représenté une troisième variante de réalisation d'un dispositif d'obstruction partielle des orifices 26 des renforts 6 d'un cloisonnement. Le dispositif comporte un élément de centrage à ailettes 40 et une tige 41 analogue à la tige 27 représentée sur la figure 9.

Les éléments de centrage à ailettes 40 comportent une partie inférieure engagée dans l'orifice 26 pratiquement sans jeu et une partie supérieure à plus grand diamètre venant reposer sur le renfort 6.

Les éléments de centrage 40 permettent d'assurer le maintien transversal de la tige 41.

Sur la figure 16, on voit la partie inférieure d'une tige 43 analogue à la tige 27 représentée sur la figure 9. La tige 43 comporte une partie d'appui inférieure 44 élargie diamétralement et comportant une partie conique susceptible de venir s'engager dans une cavité 45 usinée dans la plaque inférieure de coeur 3, dans l'alignement des orifices 26 des renforts 6 du cloisonnement 5.

La partie élargie 44 de la tige 43 vient se placer à l'intérieur de l'orifice 26 du renfort inférieur 6b du cloisonnement. La tige 43 peut comporter au moins une autre partie élargie diamétralement 47 venant s'engager dans l'orifice 26 d'un renfort situé au-dessus du renfort inférieur 6b.

Sur la figure 17, on voit un dispositif d'obturation partielle d'un orifice 26 traversant un renfort 6 constitué par une douille 48 dont les parties extrêmes 48a et 48b peuvent être rabattues vers l'extérieur pour réaliser un sertissage de la douille 48 dans l'orifice 26 du renfort 6.

Sur la figure 18, on voit un outillage 50 permettant de réaliser le sertissage de la douille 48 dans l'orifice 26 du renfort 6. L'outillage 50 comporte une tige centrale 51 à l'extrémité de laquelle est fixé un anneau de sertissage inférieur 52 et un manchon coulissant 53 dont l'extrémité constitue un anneau de sertissage supérieur. Le sertissage de la douille 48 à l'intérieur de l'orifice 26 est obtenu par traction de la tige 51 vers le haut et par poussée du manchon coulissant 53 vers le bas.

Dans tous les cas, le procédé suivant l'invention peut être mis en oeuvre à un moment quelconque après la conversion down flow-up flow du réacteur nucléaire. Ce procédé peut être mis en oeuvre, pendant un rechargement du réacteur en combustible, après un certain temps de fonctionnement de ce réacteur en circulation up flow sans utilisation du procédé de l'invention.

Le procédé et les dispositifs suivant l'invention permettent de limiter fortement l'intensité des jets parasites sur toute la hauteur du coeur et éventuellement de supprimer ces jets parasites ou d'inverser leur sens d'écoulement.

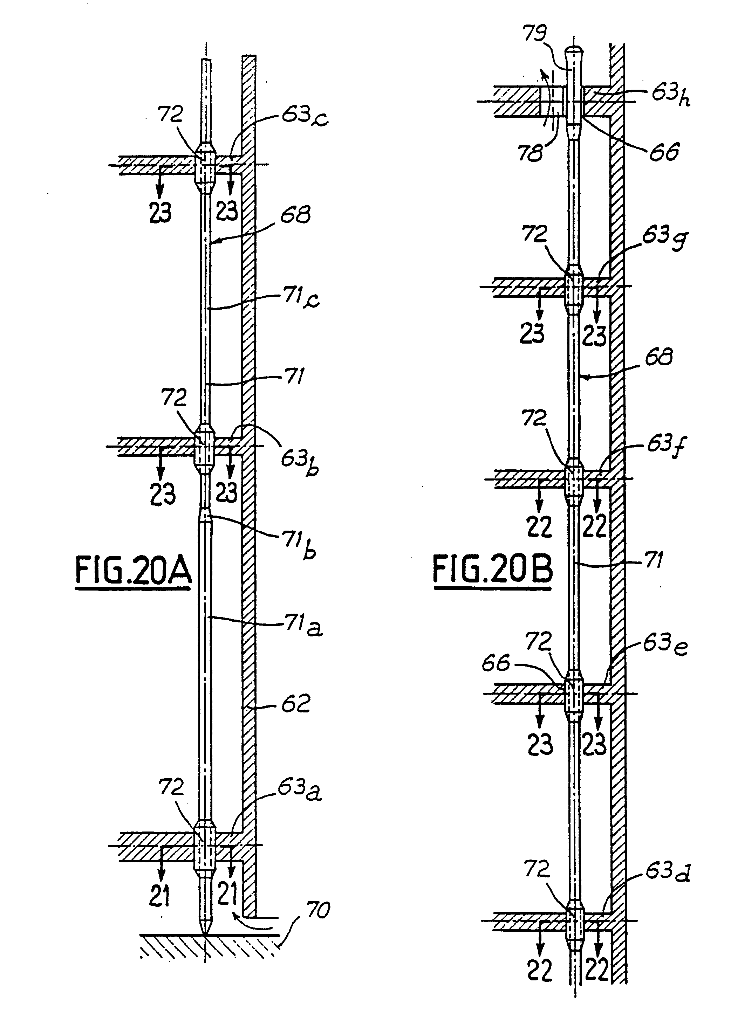

Le dispositif d'obturation suivant la cinquième variante de réalisation (figures 20A et 20B) s'applique à un réacteur nucléaire à eau sous pression dont on a réalisé la conversion downflow- upflow, comme représenté sur les figures 6 et 7.

Cette opération de conversion est réalisée en effectuant le bouchage de l'enveloppe de coeur dans sa partie supérieure et le perçage du renfort supérieur désigné par le repère 6a.

Les renforts successifs du cloisonnement disposés suivant la hauteur du coeur sont percés d'ouvertures alignées dans la direction verticale dans lesquelles sont introduites des tiges d'obturation comme représenté sur la figure 9.

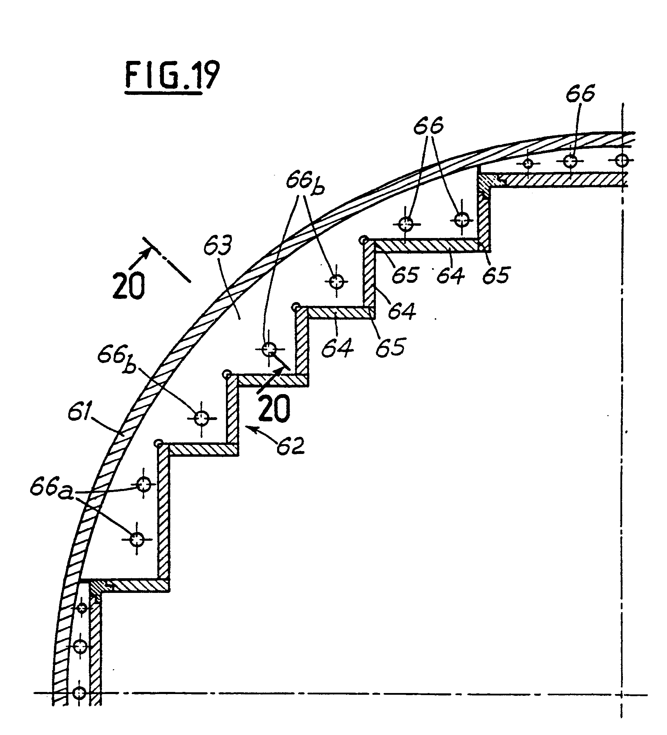

La figure 19 est une vue en coupe partielle du cloisonnement d'un réacteur nucléaire à eau sous pression, au-dessus d'un renfort de ce cloisonnement intermédiaire entre le renfort inférieur et le renfort supérieur.

Le cloisonnement du coeur comporte l'enveloppe de coeur cylindrique 61, le cloisonnement proprement dit 62 dont la section correspond à la section du coeur du réacteur, constitué par des assemblages combustibles à section carrée et les renforts tels que 63 fixés par leur partie externe sur l'enveloppe de coeur 61 et découpés à leur partie interne de façon à épouser la forme extérieure du cloisonnement 62.

Le cloisonnement proprement dit 62 est constitué par des plaques 64 assemblées à angle droit, de manière à venir en appui sur la surface périphérique du coeur du réacteur constitué par des assemblages combustibles juxtaposés. Les plaques 64 sont disposées sur toute la hauteur du coeur correspondant à la hauteur d'un assemblage combustible et sont juxtaposées suivant des surfaces de jonction 65, le long desquelles il peut subsister des interstices permettant le passage du fluide de refroidissement entre l'extérieur et l'intérieur du coeur, dans le cas où une différence de pression existe de part et d'autre du cloisonnement 62.

Les renforts 63 sont percés d'ouvertures de passage d'eau 66 dont la disposition est déterminée de façon précise par rapport au cloisonnement 62. Les ouvertures 66, suivant leur position par rapport au cloisonnement sont de deux types principaux, à savoir des ouvertures 66a et des ouvertures 66b qui se différencient par leur diamètre, les ouvertures 66b ayant un diamètre supérieur au diamètre des ouvertures 66a.

Les dispositifs d'obturation suivant l'invention sont constitués par des tiges engagées dans les ouvertures 66a et dans les ouvertures 66b usinées dans les renforts successifs suivant la hauteur du coeur et alignées dans des directions verticales, comme il est visible sur les figures 20A et 20B.

Les dispositifs d'obturation engagés dans les ouvertures 66a et les dispositifs d'obturation engagés dans les ouvertures 66b ne se distinguent que par le diamètre de la tige et les dimensions radiales des ailettes de maintien disposées dans les ouvertures 66a et 66b, au niveau des renforts 63.

Comme il est visible sur les figures 20A et 20B, le cloisonnement du coeur comporte, depuis la plaque inférieure du coeur 70 sur laquelle reposent les assemblages combustibles, huit renforts horizontaux successifs 63a, 63b, 63c, 63d, 63e, 63f, 63g et 63h disposés successivement, suivant la hauteur du coeur, avec des espacements déterminés dans la direction verticale. Ces renforts ont tous une section identique dont une partie est représentée sur la figure 19.

Le renfort 63a constitue le renfort inférieur et le renfort 63h le renfort supérieur du cloisonnement.

Le dispositif d'obturation désigné de manière générale par le repère 68, représenté sur les figures 20A et 20B, comporte une tige 71 et des jeux d'ailettes 72 fixées sur la tige 71 dans des positions correspondant aux positions des renforts successifs 63a à 63g. La tige 71 repose, à sa partie inférieure, sur la plaque inférieure de coeur 70, en-dessous du renfort inférieur 63a.

La partie inférieure 71a de la tige 71 engagée dans le renfort inférieur 63a présente un diamètre sensiblement supérieur au diamètre de la partie supérieure 71c de la tige engagée à l'intérieur des renforts 63b à 63g. Entre les parties 71a et 71c de la tige est prévue une partie de raccordement tronconique 71b située légèrement en-dessous du second renfort 63b. Cette différence de diamètre permet de donner à la tige une rigidité constante malgré l'espacement plus grand des renforts inférieurs.

On obtient ainsi une perte de charge importante à la partie inférieure du cloisonnement qui correspond à la zone où la différence de pression de l'eau de refroidissement entre la partie extérieure et la partie intérieure du cloisonnement est la plus importante.

Les dispositifs d'obturation introduits dans les ouvertures 66a aussi bien que les dispositifs d'obturation introduits dans les ouvertures 66b présentent cette particularité.

Dans le cas d'ouvertures 66a dont le diamètre est légèrement supérieur à 28,5 mm et d'ouvertures 66b dont le diamètre est un peu inférieur à 35 mm, la partie 71a de la tige, aussi bien dans le cas du dispositif d'obturation des ouvertures 66a que des ouvertures 66b, présente un diamètre de 22 mm, dans une mise en oeuvre préférentielle de l'invention.

En revanche, la partie supérieure à plus faible diamètre 71c de la tige présente un diamètre de 12 mm dans le cas des ouvertures 66a et un diamètre de 14 mm dans le cas des ouvertures 66b.

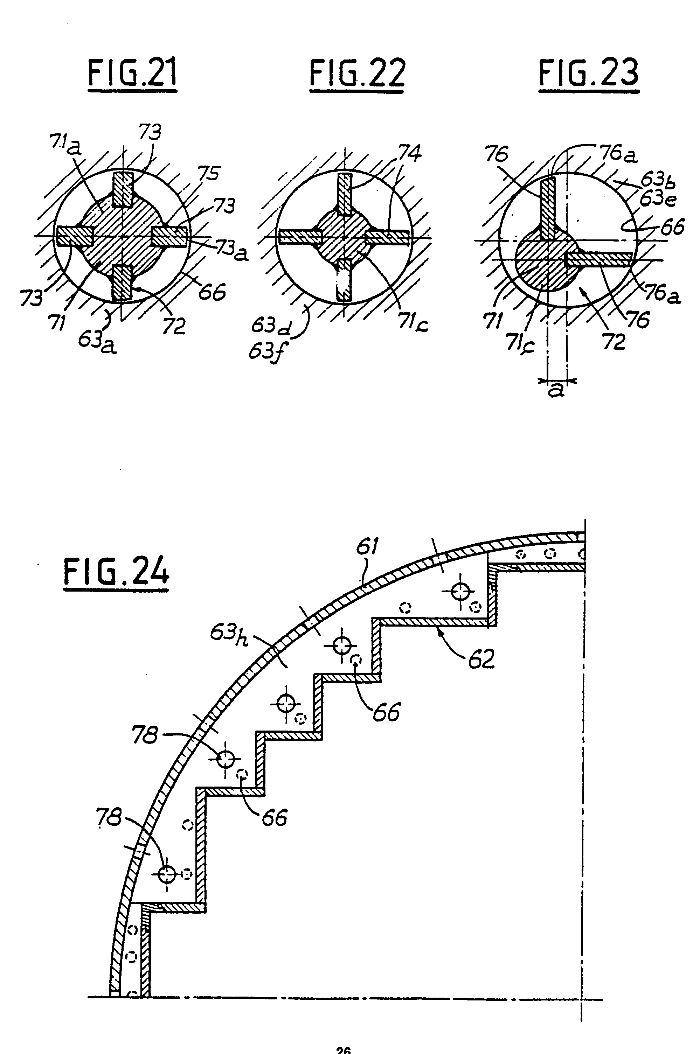

Comme il est visible sur la figure 21, le jeu d'ailettes 72 disposées à l'intérieur d'une ouverture 66 du renfort inférieur 63a est constitué de quatre ailettes 73 placées dans des positions à 90° les unes des autres à la périphérie de la tige pleine 71 dans la partie inférieure 71a à grand diamètre de cette tige. Les ailettes 73 sont disposées radialement par rapport à la tige 71 et fixées par des soudures 75 sur la surface périphérique de cette tige. Le bord extérieur 73a de chacune des ailettes 73 venant en contact avec la surface intérieure de l'ouverture 66 pour réaliser le maintien de la tige 71 se trouve à une distance de l'axe de la tige 71 qui est égale au rayon de l'ouverture 66. De cette manière, les ailettes 73 assurent un centrage parfait de la tige 71 à l'intérieur de l'ouverture 66.

Les ailettes 73 et la tige peuvent être monoblocs, les ailettes étant obtenues par usinage dans une barre pleine.

Il est bien évident que les ailettes 73 des dispositifs d'obturation des ouvertures 66a sont en saillie radiale par rapport à la surface périphérique de la tige 71 sur une distance plus faible que les ailettes 73 des dispositifs d'obturation des ouvertures 66b.

Sur la figure 22, on voit un jeu 72 d'ailettes de maintien d'une tige 71 d'un dispositif d'obturation 68, au niveau du quatrième renfort 63d ou du sixième renfort 63f. Ce jeu d'ailettes est constitué de la même manière que le jeu d'ailettes disposé au niveau du premier renfort 63a représenté sur la figure 21. Cependant, les ailettes 74 ont une extension radiale supérieure à l'extension radiale des ailettes 73, la tige 71 ayant sa partie à faible diamètre 71c engagée à l'intérieur des renforts 63d et 63f.

Les ailettes 74 fixées à la périphérie de la partie 71c de la tige assurent un centrage parfait de la tige 71 à l'intérieur des renforts correspondants.

Sur la figure 23, on voit un jeu d'ailettes 72 disposées au niveau d'une ouverture 66 de l'un des renforts 63b, 63c, 63e ou 63g. Le jeu d'ailettes 72 comporte deux ailettes 76 fixées à 90° l'une de l'autre sur la surface périphérique de la partie 71c à faible diamètre de la tige 71.

Les ailettes 76 sont en saillie radiale par rapport à la surface périphérique de la tige 71, sur une même distance. Les bords 76a de ces ailettes 76 venant en appui sur la surface intérieure de l'ouverture 66 pour assurer le maintien de la tige 71 sont à une distance de l'axe de la tige 71 supérieure d'une longueur $a$ au rayon de l'ouverture 66.

Lors de sa mise en place dans l'ouverture correspondante, la tige 71 vient se placer de manière que son axe soit décalé d'une longueur $a$ par rapport à deux axes perpendiculaires passant par le centre de l'ouverture 66. L'axe de la tige 71 est donc décalé dans une direction radiale faisant un angle de 45° avec les axes passant par le centre de l'ouverture 66.

Les bords d'appui 76a des ailettes 76 sont légèrement arrondis et inclinés de manière à épouser parfaitement la forme du contour intérieur de l'ouverture 66.

Les ailettes 76 situées au niveau du renfort 63b et au niveau du renfort 63e sont placées, à la périphérie de la tige 71, dans des positions semblables. Les ailettes 76 placées au niveau du renfort 63c ou au niveau du renfort 63g sont également placées, à la périphérie de la tige 71, dans des positions semblables mais diamétralement opposées par rapport aux positions des ailettes 76 au niveau des renforts 63b et 63e.

Il en résulte que la tige 71 est décalée dans une direction radiale à 45° par rapport aux axes passant par le centre de l'ouverture 66 et parallèles aux ailettes 76, dans un sens au niveau des renforts 63b et 63e et dans le sens opposé, au niveau des renforts 63c et 63g.

Ces décalages alternés de l'axe de la tige 71 dans des directions radiales produisent un cambrage de la tige au moment de sa mise en place assurant un maintien de cette tige par rapport au cloisonnement dû au rappel élastique de la tige vers sa forme initiale. Ce maintien est obtenu avec un dispositif simple ne comportant pas de pièce mobile d'accrochage. Il s'oppose au soulèvement de la tige et au développement de vibrations induites par l'écoulement de l'eau.

Sur la figure 24, on voit la partie supérieure du cloisonnement au niveau du renfort supérieur 63h.

Pour réaliser la conversion downflow-upflow, le renfort 63h est percé d'ouvertures 78 placées dans des positions déterminées par rapport au cloisonnement.

Comme il est visible sur la figure 20B, ces ouvertures 78 peuvent être très voisines des ouvertures 66 permettant l'introduction des dispositifs d'obturation 68 dans le cloisonnement. Ces dispositifs peuvent comporter éventuellement un moyen de fixation 79 à leur partie supérieure venant se loger dans l'ouverture 66 du renfort supérieur 63h.

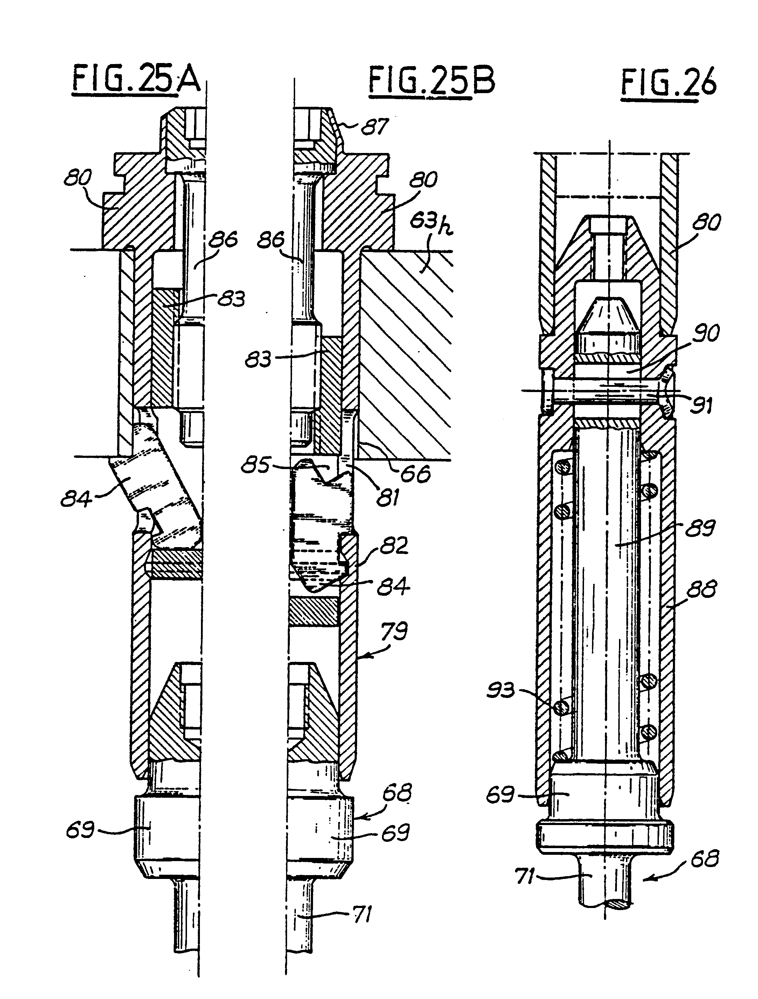

Sur les figures 25A et 25B, on a représenté un moyen de fixation 79 d'un dispositif d'obturation 68 sur le renfort supérieur 63h constitué par un bouchon ayant une structure assez analogue à celle du bouchon pouvant servir à obturer la partie supérieure de l'enveloppe de coeur, dans la conversion downflow-upflow d'un réacteur nucléaire.

Le bouchon 79 comporte un corps 80 dont la partie supérieure à grand diamètre repose sur le renfort supérieur 63h, au niveau d'une ouverture 66 et dont la partie inférieure à plus faible diamètre de forme tubulaire est introduite dans l'ouverture 66. La partie tubulaire du corps 80 comporte des fenêtres 81 et une gorge 82 sur sa surface intérieure.

A l'intérieur de la partie tubulaire du corps 80 est monté coulissant un manchon 83 comportant des lumières 85 dans chacune desquelles est monté un doigt pivotant 84.

Le manchon coulissant 83 peut être déplacé dans la direction axiale par une vis 86 dont la tête est accessible au-dessus du renfort supérieur 63h du cloisonnement.

Sur la figure 25A, on a représenté le manchon coulissant 83 dans sa position haute, les doigts 84 coopérant par leur partie d'extrémité inférieure avec la surface intérieure de la partie tubulaire du corps 80 étant alors engagés sur la surface inférieure du renfort 63h, par leur partie d'extrémité supérieure.

Sur la figure 25B, on a représenté le manchon coulissant 83 dans sa position basse, les doigts pivotants 84 coopérant par leur partie d'extrémité avec le fond de la gorge 82 étant alors dans une position rétractée à l'intérieur des lumières 81. Dans cette position rétractée, le dispositif d'obturation 68 ne se trouve pas fixé par rapport au renfort supérieur 63h et peut être extrait du cloisonnement par traction sur son extrémité supérieure.

La vis 86 peut être bloquée en rotation par une partie déformable 87 du corps 80 qui est rabattue dans un embrèvement prévu dans la tête de la vis 86.

Le moyen de fixation 79 peut donc passer de sa position verrouillée représentée sur la figure 25A à sa position déverrouillée représentée sur la figure 25B et inversement par déplacement de la douille coulissante 83 dans un sens ou dans l'autre par vissage ou dévissage de la vis 86.

La tête de l'obturateur 69 constituée par un élargissement de la tige d'obturation 71 est engagée dans l'extrémité inférieure de la partie tubulaire du corps 80, de manière que le moyen de fixation 79 assure le maintien du dispositif d'obturation 68 tout en permettant des déplacements axiaux de la tige 71 par rapport au corps 80, sous l'effet des dilatations thermiques.

Sur la figure 26, on voit une variante de réalisation de la liaison entre la tige 71 du dispositif d'obturation 68 et la partie inférieure du corps 80 d'un moyen de fixation tel que le moyen 79 représenté sur les figures 25A et 25B.

Une douille 88 est engagée par sa partie supérieure dans l'extrémité inférieure du corps tubulaire 80 et reçoit dans sa partie interne, un prolongement 89 de la tête 69 du dispositif d'obturation 68. Le prolongement 89 de la tête 69 est percé d'une lumière traversante 90 dans laquelle est engagée une goupille 91 rivée sur la douille 88. Un ressort hélicoïdal 93 est intercalé entre le fond de la douille 88 et la tête 69 du dispositif d'obturation 68. La lumière 90 permet un débattement axial du corps 89 et de la tige 71 du dispositif d'obturation 68 par rapport à la douille 88, ce qui permet d'absorber les dilatations thermiques de la tige d'obturation 71 pendant le fonctionnement du réacteur. Le ressort hélicoïdal 93 permet un rappel de la tige d'obturation 71 vers le bas.

Les dispositifs d'obturation constitués par les tiges 71 et les jeux d'ailettes 72 peuvent être réalisés avantageusement en un acier inoxydable austénitique à l'azote, par exemple du type Z2CN1910 ou encore en un acier de boulonnerie du type Z2CND1712 écroui utilisé pour réaliser des éléments de boulonnerie des équipements internes des réacteurs nucléaires à eau sous pression.

Avec les dispositifs suivant l'invention, on peut réaliser une obturation partielle des ouvertures du renfort du cloisonnement, cette obturation représentant une réduction des ouvertures des renforts comprise entre 18 et 34%, les valeurs pouvant être différentes à chaque niveau.

Il serait possible bien entendu de réaliser une obturation plus complète des ouvertures, dans la mesure où cette obturation serait nécessaire.

Les vitesses moyennes de circulation de l'eau de refroidissement dans les sections rétrécies des ouvertures des renforts sont les suivantes : 8 m/s dans le renfort inférieur, 5,5 m/s dans les renforts intermédiaires et 2,5 m/s dans le renfort supérieur.

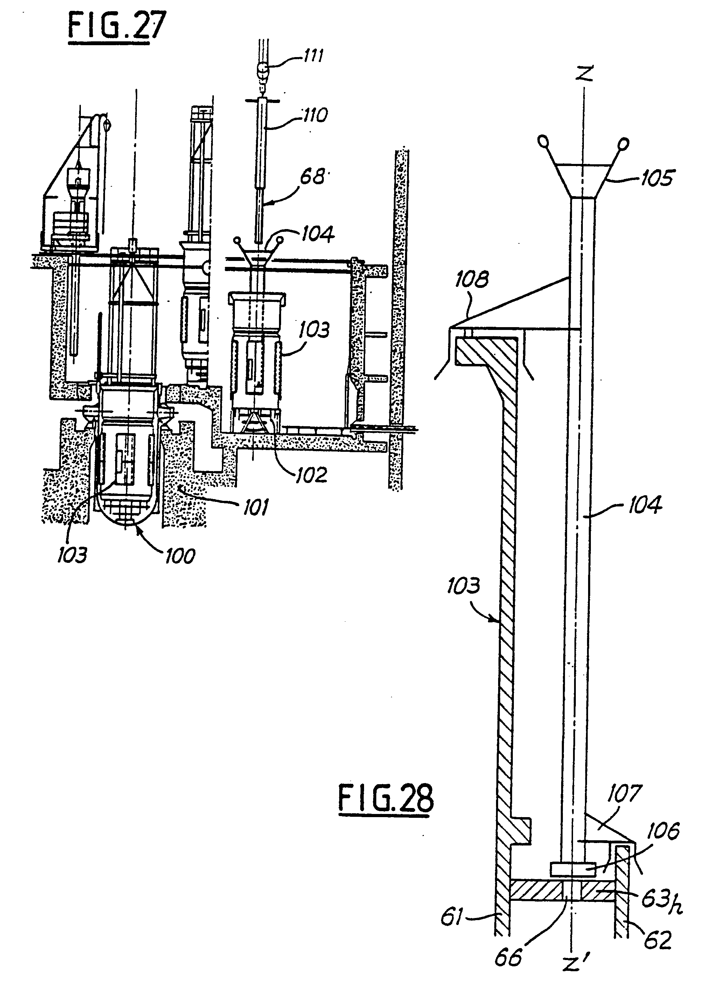

Sur la figure 27, on a représenté la cuve 100 d'un réacteur nucléaire disposée dans la structure 101 du bâtiment réacteur qui comporte, dans une disposition adjacente par rapport à la cuve 100, un support 102 des équipements internes inférieurs 103 du réacteur nucléaire.

Pour effectuer la mise en place de dispositifs d'obturation suivant l'invention dans le cloisonnement du coeur, les équipements internes inférieurs 103 comportant le cloisonnement sont sortis de la cuve et mis en place sur le support 102.

Un tube de guidage 104 est mis en place à l'intérieur des équipements internes inférieurs 103 pour réaliser l'introduction d'un premier dispositif d'obturation.

Comme il est visible sur la figure 28, le tube de guidage 104 qui comporte une extrémité supérieure évasée 105 est mis en place dans les équipements internes inférieurs 103 comportant l'enveloppe de coeur 61 et le cloisonnement 62, de manière que son axe ZZ' soit aligné avec la direction d'alignement verticale d'une série d'ouvertures 66 des renforts 63. La partie inférieure 106 du tube de guidage 104 vient reposer sur le renfort supérieur 63h, autour d'une ouverture 66 de ce renfort 63h. Des dispositifs de maintien 107 et 108 permettent de fixer le tube de guidage 104 sur le cloisonnement 62 et sur la partie supérieure de l'enveloppe de coeur 61 des équipements internes inférieurs 103, respectivement.

Un obturateur 68 est fixé à l'extrémité d'une tige de manutention 110, elle-même reliée au crochet de manutention 111 d'un pont roulant du bâtiment réacteur.

Le dispositif d'obturation 68 comportant une tige 71 et des jeux d'ailettes de maintien 72 est introduit dans le tube de guidage 104 dans lequel on fait descendre le dispositif d'obturation 68 et la tige de manutention 110. Le dispositif d'obturation 68 est introduit dans l'ouverture 66 du renfort supérieur 63h puis dans les ouvertures des renforts successifs alignées avec l'ouverture 66, par poussée sur la tige de manutention 110.

Au niveau de certains renforts, la position décalée des ailettes de maintien permet de réaliser un décalage de l'axe de la tige 71, permettant un maintien de cette tige par cambrage, à l'intérieur du cloisonnement du coeur.

Lorsque la partie inférieure de la tige 71 vient en butée sur la plaque inférieure de coeur, la tige de manutention 110 est séparée du dispositif d'obturation 108 et extraite du tube de guidage 104.

Le tube de guidage 104 est déplacé vers une nouvelle position dans l'alignement d'une série d'ouvertures des renforts du cloisonnement du coeur.

Le moyen de fixation 79 du dispositif d'obturation 68 est verrouillé à l'intérieur de l'ouverture 66 du renfort supérieur 63h.

Il est alors possible d'effectuer la mise en place d'un nouveau dispositif d'obturation, de la manière qui a été décrite plus haut.

Le dispositif d'obturation suivant l'invention peut donc être mis en place et fixé dans le cloisonnement du coeur d'un réacteur nucléaire par simple poussée à l'intérieur d'une série d'ouvertures alignées des renforts du cloisonnement.

De même, le démontage d'un dispositif d'obturation peut être effectué par traction sur l'extrémité supérieure de la tige de ce dispositif d'obturation, au niveau du renfort supérieur.

Ce dispositif est d'autre part d'une structure simple et ne comporte pas de pièce mobile.

L'invention ne se limite pas aux modes de réalisation qui ont été décrits.

C'est ainsi qu'on peut imaginer d'utiliser des dispositifs d'obturation partielle des ouvertures des renforts d'un type différent de ceux qui ont été décrits.

On peut envisager d'obturer partiellement les ouvertures de passage de certains renforts uniquement et en particulier des renforts situés vers la partie inférieure du coeur. De façon avantageuse, on peut obturer uniquement les trous de passage du renfort inférieur.

Dans le cas où les ouvertures des renforts ne sont pas alignées suivant des directions verticales ou encore dans le cas où les ouvertures des renforts inférieurs ne sont pas dans l'alignement des ouvertures du renfort supérieur, il est possible d'utiliser des outillages coudés pour la mise en place des dispositifs d'obturation partielle.

Dans le cas d'une tige cambrée suivant la cinquième variante de réalisation, on peut imaginer des jeux d'ailettes d'une forme et d'une disposition différentes de celles qui ont été décrites.

De mêmes, les moyens de fixation des dispositifs d'obturation sur le renfort supérieur peuvent avoir une forme différente.

La mise en place des dispositifs d'obturation dans les équipements internes inférieurs du réacteur peut être réalisée d'une manière différente.

Enfin, l'invention s'applique dans tous les cas où l'on a réalisé une conversion downflow-upflow d'un réacteur nucléaire par perçage du renfort supérieur de son cloisonnement et par bouchage de l'enveloppe de coeur.

Le procédé et les dispositifs suivant l'invention s'appliquent dans le cas de tout réacteur nucléaire dont le cloisonnement a été modifié pour passer d'une circulation down flow à une circulation up flow de l'eau de refroidissement.

## Revendications

1. Procédé de limitation de l'intensité de jets parasites d'eau de refroidissement dans un réacteur nucléaire à eau sous pression en service, le réacteur comportant un coeur constitué par des assemblages combustibles juxtaposés et entouré à sa périphérie par un cloisonnement comportant des plaques verticales (5) entre lesquelles subsistent des interstices constituant des passages pour les jets d'eau parasites à travers le cloisonnement (5) vers l'intérieur du coeur, et des plaques de renfort horizontales (6) disposées à différents niveaux entre les plaques verticales (5) et une enveloppe de coeur cylindrique (1) à axe vertical entourant le cloisonnement et ménageant un espace annulaire (7) autour des plaques verticales (5) dans lequel sont placés les renforts (6) qui sont percés de façon que l'eau de refroidissement circule de bas en haut, aussi bien dans le coeur qu'à l'intérieur du cloisonnement que dans l'espace annulaire (7), caractérisé par le fait que pendant un arrêt du réacteur on introduit et on met en place, par les ouvertures (25) du renfort (6a) situé le plus haut, ou renfort supérieur des dispositifs d'obturation partielle (27 ; 35 ; 35' ; 41 ; 48) d'un certain nombre au moins des ouvertures (26) des renforts (6) situés en-dessous du renfort supérieur (6a), les dispositifs d'obturation (27 ; 35 ; 35' ; 41 ; 48) restant en place après le redémarrage du réacteur, pour augmenter et régler la perte de charge de l'eau de refroidissement circulant dans l'espace annulaire (7).

2. Procédé suivant la revendication 1, caractérisé par le fait qu'on réalise l'obturation partielle des ouvertures (26) des renforts (6) situés dans la partie inférieure du cloisonnement uniquement.

3. Procédé suivant la revendication 2, caractérisé par le fait qu'on réalise l'obturation partielle des ouvertures (26) du renfort (6b) situé le plus bas sur le cloisonnement uniquement.

4. Procédé suivant l'une quelconque des revendications 1, 2 et 3, caractérisé par le fait que les dispositifs d'obturation partielle des ouvertures (26) des renforts (6) du cloisonnement sont tels que la pression dans l'espace annulaire (7) du cloisonnement soit inférieure à la pression dans le coeur, suivant toute la hauteur du coeur, pendant le fonctionnement du réacteur.

5. Dispositif de limitation de l'intensité de jets parasites d'eau de refroidissement dans un réacteur nucléaire à eau sous pression, le réacteur comportant un coeur constitué par des assemblages combustibles juxtaposés et entouré à sa périphérie par un cloisonnement comportant des plaques verticales (5) entre lesquelles subsistent des interstices constituant des passages pour des jets d'eau parasites à travers le cloisonnement, vers l'intérieur du coeur, et des plaques de renfort horizontales (6) disposées entre les plaques verticales (5) et une enveloppe de coeur (1) cylindrique à axe vertical entourant le cloisonnement et ménageant un espace annulaire (7) autour des plaques verticales dans lequel sont placés les renforts (6) qui sont percés de façon que l'eau de refroidissement circule de bas en haut, aussi bien dans le coeur, à l'intérieur du cloisonnement que dans l'espace annulaire (7), caractérisé par le fait qu'il est constitué par au moins un dispositif d'obturation partielle (27 ; 35 ; 35' ; 41 ; 48) d'au moins une ouverture (26) d'un renfort (6) du cloisonnement.

6. Dispositif suivant la revendication 5, caractérisé par le fait qu'il est constitué par une tige (27) ayant un diamètre inférieur au diamètre des ouvertures (26) des renforts (6) susceptible d'être engagée dans une pluralité d'ouvertures (26) des renforts (6) alignées suivant une direction verticale.

7. Dispositif suivant la revendication 6, caractérisé par le fait que la tige (27) comporte une extrémité élargie diamétralement (27b ; 44) susceptible d'être engagée dans l'ouverture (26) du renfort (6b) situé le plus bas sur le cloisonnement.

8. Dispositif suivant la revendication 7, caractérisé par le fait qu'il comporte à son extrémité opposée à la partie élargie (27b) une partie d'appui (27a) sur le renfort supérieur (6a).

9. Dispositif suivant la revendication 6, caractérisé par le fait que la partie élargie (44) comporte une partie d'appui sur une plaque inférieure de coeur (3) disposée en-dessous du cloisonnement (5).

10. Dispositif suivant la revendication 6, caractérisé par le fait que la tige (35 ; 35') est creuse et comporte des dispositifs de centrage (36 ; 36') placés sur la tige (35 ; 35') dans des positions correspondant aux parties de la tige venant s'engager à l'intérieur des ouvertures (26) des renforts (6) et une tige de manoeuvre (37 ; 37') mobile axialement dans la tige creuse (35 ; 35') pour assurer l'expansion diamétrale des dispositifs de centrage (36 ; 36') par déplacement axial.

11. Dispositif suivant la revendication 10, caractérisé par le fait que les dispositifs de centrage (36) sont constitués par des ailettes disposées dans des directions radiales autour d'une partie de la tige (35) dans laquelle l'alésage (35a) de la tige a un diamètre réduit, la tige de manoeuvre (37) comportant une partie élargie (38) susceptible de coopérer avec la partie (35a) de diamètre réduit de l'alésage de la tige (35) pour réaliser une expansion radiale des ailettes (36) à l'intérieur de l'ouverture (26).

12. Dispositif suivant la revendication 10, caractérisé par le fait que les dispositifs de centrage sont constitués par des doigts (36') montés pivotants sur la tige (35'), la tige de manoeuvre (37') comportant une partie (38') d'actionnement des doigts (36'), pour leur déplacement vers l'extérieur dans des directions radiales, à l'intérieur de l'ouverture (26).

13. Dispositif suivant la revendication 5, caractérisé par le fait qu'il est constitué par une douille tubulaire (48) dont le diamètre extérieur est inférieur au diamètre des ouvertures (26) des renforts (6) comportant des parties déformables (48a) pour son sertissage à l'intérieur d'une ouverture (26) et sa fixation sur le renfort (6) correspondant.

14. Dispositif suivant la revendication 6 comportant des dispositifs de maintien (72) au niveau de chacune des ouvertures (66) des renforts (63), constitués par des jeux d'au moins deux ailettes (73, 74, 76) disposées dans des directions radiales autour d'une partie de la tige (71), caractérisé par le fait que les ailettes (76) d'au moins deux jeux d'ailettes (72) suivant la longueur de la tige (71) présentent des extrémités extérieures (76a) d'appui sur les bords de l'ouverture (66) des renforts (63) correspondants dont la distance à l'axe de la tige (71) est sensiblement supérieure au rayon des ouvertures (66) correspondantes, de manière à produire un décalage transversal de la tige (71) dans deux directions différentes, dans deux zones au moins suivant la longueur de la tige (71), lorsque cette tige est mise en place dans des ouvertures (66) des renforts (63) alignées suivant une direction verticale.

15. Dispositif suivant la revendication 14, caractérisé par le fait qu'au moins deux jeux d'ailettes (72) sont constitués de deux ailettes (76) fixées à la périphérie de la tige (71) dans des directions à 90° l'une de l'autre, dont l'extrémité extérieure (76a) se trouve à une distance de l'axe de la tige (71) supérieure au rayon de l'ouverture (66) dans laquelle est disposé le jeu d'ailettes (72) correspondant.

16. Dispositif suivant la revendication 15, caractérisé par le fait qu'il comporte en outre des jeux d'ailettes (72) comportant quatre ailettes (73, 74) dans des directions radiales par rapport à la tige (71) faisant entre elles des angles égaux à 90°, dont les extrémités extérieures (73a) venant en appui sur le contour intérieur de l'ouverture (66) du renfort (63) correspondant sont à une distance de l'axe de la tige (71) égale au rayon de l'ouverture (66).

17. Dispositif suivant l'une quelconque des revendications 15 et 16, caractérisé par le fait que les ailettes (76) d'au moins deux jeux (72) d'ailettes produisant un décalage transversal de l'axe de la tige (71) sont disposées les unes par rapport aux autres de manière à produire un décalage transversal de la tige dans des directions opposées.

18. Dispositif suivant la revendication 17, dans le cas d'un cloisonnement comportant huit renforts disposés successivement suivant la hauteur du coeur, caractérisé par le fait que chaque dispositif d'obturation comporte, au niveau du premier, du quatrième et du sixième renforts à partir du bas, un jeu d'ailettes (72) ne produisant pas de décalage axial de la tige (71), au niveau du deuxième et du cinquième renforts un jeu d'ailettes (72) produisant un décalage transversal de la tige (71) dans une direction et dans un premier sens et, au niveau des troisième et septième renforts, un jeu d'ailettes (72) produisant un décalage transversal de la tige (71) dans la même direction dans un second sens opposé au premier.

19. Dispositif suivant l'une quelconque des revendications 14 à 18, caractérisé par le fait qu'il comporte à sa partie supérieure, un moyen de fixation (79) dans une ouverture (66) du renfort supérieur (63h) du cloisonnement.

20. Dispositif suivant la revendication 19, caractérisé par le fait que le moyen de fixation (79) est constitué par un bouchon comportant un corps tubulaire (80) et une douille (83) montée coulissante dans le corps tubulaire (80), portant des doigts pivotants (84) de verrouillage du bouchon (79) sur le renfort supérieur (63h), mobiles entre une position de verrouillage et une position de déverrouillage, dans la direction axiale du bouchon (79) correspondant à la direction axiale de la tige (71) du dispositif d'obturation (68), grâce à une vis de manoeuvre (86) engagée dans la douille coulissante (83).

21. Dispositif suivant la revendication 19, caractérisé par le fait que la partie supérieure (69, 89) de la tige (71) du dispositif d'obturation (68) est engagée dans le moyen de fixation (79) de manière à présenter un certain débattement dans la direction axiale, par rapport au dispositif de fixation (79).

22. Dispositif suivant la revendication 21, caractérisé par le fait que la tige (71) présente un prolongement (89) engagé dans l'ouverture axiale d'une douille (88), fixé par rapport à la douille (88) avec une certaine latitude de déplacement axial et rappelé vers le bas par un ressort (93), la douille (88) étant engagée dans le moyen de fixation (79) du dispositif d'obturation sur le renfort supérieur (63h).

23. Procédé de limitation de l'intensité des jets parasites d'eau de refroidissement selon la revendication 1 par obturation d'ouvertures alignées de renforts du cloisonnement du coeur d'un réacteur nucléaire caractérisé par le fait que pendant un arrêt du réacteur :

     – on extrait de la cuve (100) du réacteur, des équipements internes (103) comportant le cloisonnement du coeur,

     – on dispose les équipements internes inférieurs (103) sur un support (102), à l'intérieur du bâtiment du réacteur,

     – on dispose un tube de guidage (104) dans les équipements internes (103), dans l'alignement axial d'un ensemble d'ouvertures (66) alignées des renforts (63) du cloisonnement,

     – on introduit un dispositif d'obturation (68) comportant une tige (71) et des jeux d'ailettes (72) disposées dans des emplacements correspondants aux emplacements des renforts, suivant la longueur de la tige (71), dans le tube de guidage (104),

     – on guide le dispositif d'obturation (68), de façon à l'introduire dans l'ouverture (66) du renfort supérieur (63h) du cloisonnement, puis dans les ouvertures (66) des autres renforts du cloisonnement, par simple poussée sur la tige (71), la fixation du dispositif d'obturation dans le cloisonnement étant assurée par décalage transversal d'au moins deux jeux d'ailettes (72), suivant la longueur de la tige (71).

## Ansprüche

1. Verfahren zur Begrenzung der Intensität von parasitären Kühlwasserstrahlen in einem Druckwasser-Kernreaktor. wobei der Reaktor einen Kern aufweist, gebildet aus einer Anordnung von nebeneinander angeordneten Brennstoffen und umgeben an seinem Umfang durch eine Begrenzung, die vertikale Platten (5) aufweist, zwischen denen Spalten bestehen, die Hindurchtritte für die parasitären Wasserstrahlen durch die Begrenzung (5) hindurch in das Innere des Kerns bilden, und horizontale Verstärkungsplatten (6) aufweist, die auf unterschiedlichen Niveaus zwischen den vertikalen Platten (5) angeordnet sind, und eine zylindrische Kernumhüllung (1) aufweist, mit einer vertikalen Achse, die die Begrenzung umgibt und einen ringförmigen Raum (7) um die vertikalen Platten (5) ausbildet, in die die Verstärkungen (6) plaziert sind, die derartig mit Löchern versehen sind, daß das Kühlwasser von unten nach oben, sowohl in dem Kern als auch im Inneren der Begrenzung und im ringförmigen Raum (7) zirkuliert, **dadurch gekennzeichnet, daß** während einem Abschalten des Reaktors eine bestimmte Anzahl wenigstens der Öffnungen (26) der Verstärkungen (6), die unterhalb der oberen Verstärkungen (6a) angeordnet sind, durch die Öffnungen (25) der Verstärkung (6a), die am höchsten angeordnet ist, oder obere Verstärkung der Teilabdeckvorrichtungen (27 ; 35 ; 35' ; 41 ; 48), wobei die Abdeckvorrichtungen (27 ; 35 ; 35' ; 41 ; 48) an ort und Stelle verbleiben nach dem wieder Ingangsetzen des Reaktors, um den Chargenverlust des in dem ringförmigen Raum (7) zirkulierenden Kühlwassers anzuheben und einzustellen.

2. Verfahren nach Anspruch 1, **dadurch gekennzeichnet**, daß die teilweise Abdeckung der Öffnungen (26) der Verstärkung (6), die ausschließlich in dem unteren Bereich der Bereich der Begrenzung angeordnet sind, erzeugt wird.

3. Verfahren nach Anspruch 2, **dadurch gekennzeichnet**, daß die teilweise Abdeckung der Öffnungen (26) der Verstärkung (6b), die an unterster Stelle nur auf der Begrenzung angeordnet ist, erzeugt wird.

4. Verfahren nach einem der Ansprüche 1, 2 oder 3, **dadurch gekennzeichnet**, daß die teilweisen Abdeckungsvorrichtungen der Öffnungen (26) der Verstärkungen (6) der Begrenzung derart sind, daß der Druck in dem ringförmigen Raum (7) der Begrenzung über die gesamte Höhe des Kerns geringer ist, als der Druck in dem Kern, während des Betriebs des Reaktors.

5. Vorrichtung zur Begrenzung der Intensität von parasitären Kühlwasserstrahlen in einem Druckwasserkühlreaktor, wobei der Kühlreaktor einen Kern aufweist, gebildet aus nebeneinander angeordneten Brennanordnungen, und an seinem Umfang umgeben ist durch eine Begrenzung, die vertikale Platten (5) aufweist, zwischen denen Spalten ausgebildet sind, die Passagen für die parasitären Wasserstrahlen durch die Begrenzung hindurch im das Innere des Kerns bilden, und aus horizontalen Verstärkungsplatten (6) gebildet ist, die zwischen den vertikalen Platten (5) angeordnet sind, und einer zylindrischen Kernumhüllung (1) gebildet ist, mit vertikaler Achse, die die Begrenzung umgibt und einen ringförmigen Raum (7)µm die vertikalen Platten herum ausbildet, in denen die Verstärkungen (6) angeordnet sind, die derart mit Löchern versehen sind, daß das Kühlwasser von unten nach oben sowohl in dem Kern im Inneren der Begrenzung als auch im ringförmigen Raum (7) zirkuliert, **dadurch gekennzeichnet**, daß sie gebildet ist durch wenigstens eine teilweise Abdeckvorrichtung (27 ; 35 ; 35' ; 41 ; 48) mit wenigstens einer Öffnung (26) einer Verstärkung (6) der Begrenzung.

6. Vorrichtung nach Anspruch 5, **dadurch gekennzeichnet**, daß sie gebildet ist aus einer Stanqe (27), die einen geringeren Durchmesser bezüglich des Durchmessers der Öffnungen (26) der Verstärkungen (6) aufweist, geeignet, in eine Mehrzahl von Offnungen (26) der Verstärkungen (6) eingeführt zu werden, die in vertikaler Richtung ausgerichtet sind.

7. Vorrichtung nach Anspruch 6, **dadurch gekennzeichnet**, daß die Stange (27) ein durchmesservergrößertes Ende (27b ; 44) aufweist, das geeignet ist, in die Öffnung (26) der Verstärkung (6b) eingeführt zu werden, die am untersten Ende der Begrenzung angeordnet ist.

8. Vorrichtung nach Anspruch 7, **dadurch gekennzeichnet**, daß sie an ihrem dem vergrößerten Bereich (27b) gegenüberliegenden Ende einen Stützabschnitt (27a) auf der oberen Verstärkung (6a) aufweist.

9. Vorrichtung nach Anspruch 6, **dadurch gekennzeichnet**, daß der vergrößerte Abschnitt (44) einen Abstützbereich auf einer unteren Platte des Kerns (3) aufweist, die unterhalb der Begrenzung (5) angeordnet ist.

10. Vorrichtung nach Anspruch 6, **dadurch gekennzeichnet**, daß die Stange (35 ; 35') hohl ist und Zentrierungsvorrichtungen (36 ; 36') aufweist, die an der Stange (35 ; 35') in Positionen angeordnet sind, die den Bereichen der Stange entsprechen, die in Eingriff im Inneren der Öffnungen (26) der verstärkungen (6) kommen, und eine Betätigungsstange (37 ; 37') aufweist, die axial beweglich ist in der hohlen Stange (35 ; 35'), um die Durchmesservergrößerung der Zentriervorrichtungen (36 ; 36') durch axiale Bewegung sicherzustellen.

11. vorrichtung nach Anspruch 10, **dadurch gekennzeichnet**, daß die Zentriervorrichtungen (36) durch kleine Flügel gebildet werden, die in Radialrichtungen um einen Bereich der Stange (35) angeordnet sind, in dem die Ausnehmung (35a) der Stange einen verringerten Durchmesser aufweist, wobei die Betätigungsstange (37) einen vergrößerten Bereich (38) aufweist, der geeignet ist, mit dem Bereich von verringertem Durchmesser (35a) der Ausnehmung der Stange (35) zusammenzuwirken, um eine radiale Ausdehnung der kleinen Flügel (36) im Inneren der Öffnung (26) zu erzeugen.

12. Vorrichtung nach Anspruch 10, **dadurch gekennzeichnet**, daß die Zentrierungsvorrichtungen gebildet werden durch Finger (36'), die schwenkbar auf der Stange (35') angebracht sind, wobei die Betätigungsstange (37') einen Betätigungsbereich (38') der Finger (36') aufweist, um sie nach außen in radialen Richtungen im Inneren der Öffnungen (26) zu bewegen.

13. Vorrichtung nach Anspruch 5, **dadurch gekennzeichnet**, daß sie gebildet ist aus einem rohrförmigen Ring (48) dessen Außendurchmesser geringer ist als der Durchmesser der Öffnungen (26) der Verstärkungen (86), mit deformierbaren Bereichen (48a) für sein Einzwängen im Inneren einer Öffnung (26) und seiner Fixierung auf der entsprechenden Verstärkung (6).

14. Vorrichtung nach Anspruch 6 mit Haltevorrichtungen (72) auf der Höhe einer jeden der Öffnungen (66) der Verstärkungen (63), gebildet aus SÄtzen von wenigstens zwei kleinen Flügeln (73, 74, 76) die in radialen Richtungen um einen Bereich der Stange (71) angeordnet sind, **dadurch gekennzeichnet**, daß die kleinen Flügel (76) von wenigstens zwei Flügelsätzen (72) entlang der Stange (71), äußere Stützenden (76a) auf die Ränder der Öffnung (66) der zugehörigen Verstärkungen (63) aufweist, deren Abstand zur Achse der Stange (71) deutlich größer ist als der Radius der zugehörigen Öffnungen (66), derart, um einen Querversatz der Stange (71) in zwei unterschiedliche Richtungen, in zwei Zonen wenigstens gemäß der Länge der Stange (71) zu erzeugen, wenn diese Stange an Ort und Stelle in die Öffnungen (66) der Verstärkungen (63) gesetzt wird, die in vertikaler Richtung ausgerichtet sind.

15. Vorrichtung nach Anspruch 14, **dadurch gekennzeichnet,** daß wenigstens zwei Sätze von kleinen Flügeln (72) gebildet werden aus zwei kleinen Flügeln (76), die am Umfang der Stange (71) in 90° zueinander versetzten Richtungen befestigt sind, deren äußeres Ende (76a) sich in einem Abstand zur Achse der Stange (71) befindet, der größer ist als der Radius der Öffnung (66), in der der entsprechende Satz von Flügeln (72) angeordnet ist.

16. Vorrichtung nach Anspruch 15, **dadurch gekennzeichnet,** daß sie weiterhin Sätze von kleinen Flügeln (72) aufweist, die vier Flügel (73, 74) aufweisen, in radialen Richtungen bezüglich der Stange (71), wobei sie untereinander Winkel gleich 90° einschließen, deren äußere Enden (73a), die in Andruck auf die innere Kontur der Öffnung (66) der entsprechenden Verstärkung (63) kommen, in einem Abstand zur Achse der Stange (71) sind, der gleich dem Radius der Öffnung (66) ist.

17. Vorrichtung nach Anspruch 15 oder 16, **dadurch gekennzeichnet,** daß die Flügel (76) wenigstens zweier Sätze (72) von Flügeln, die eine Querversetzung der Achse der Stange (71) hervorrufen, zueinander derart angeordnet sind, daß sie eine Querversetzung der Stange in entgegengerichtete Richtungen erzeugen.

18. Vorrichtung nach Anspruch 17, in dem Fall, daß eine Begrenzung acht Verstärkungen aufweist, die aufeinander folgend gemäß bzw. entlang der Höhe des Kern angeordnet sind, **dadurch gekennzeichnet,** daß jede Abdeckvorrichtung auf der Höhe der ersten, der vierten und der sechsten Verstärkung im unteren Bereich einen Satz von Flügeln (72) aufweist, die keine axiale Versetzung der Stange (71) hervorrufen, auf der Höhe der zweiten und fünften Verstärkung einen Satz von Flügeln (72) aufweist, die eine Querversetzung der Stange (71) hervorrufen in eine Richtung und in eine erste Richtung, und auf der Höhe der dritten und siebten Verstärkung einen Satz von Flügeln (72) aufweist, die eine Querversetzung der Stange (71) in dieselbe Richtung in eine zweite Richtung entgegen der ersten erzeugen.

19. Vorrichtung nach einem der Ansprüche 14 bis 18, **dadurch gekennzeichnet,** daß sie an ihrem oberen Bereich eine Befestigungseinrichtung (79) in eine Öffnung (66) der oberen Verstärkung (63h) der Begrenzung aufweist.

20. Vorrichtung nach Anspruch 19, **dadurch gekennzeichnet,** daß die Befestigungseinrichtung (79) aus einem Stopfen gebildet ist, der einen rohrförmigen Körper (80) und einen Ring (83) aufweist, der gleitbeweglich in den rohrförmigen Körper (80) angeordnet ist, mit schwenkbaren Fingern (84) zur Verriegelung des Stopfens (79) auf der oberen Verstärkung (63h), die zwischen einer Verriegelungsstellung und einer Entriegelungsstellung in eine axiale Richtung des Stopfens (79) entsprechend der axialen Richtung der Stange (71) der Abdeckvorrichtung (68) Dank einer Betätigungsschraube (86) bewegbar sind, die in den gleitbeweglichen Ring (83) eingreift.

21. Vorrichtung nach Anspruch 19, **dadurch gekennzeichnet,** daß der obere Bereich (69, 89) der Stange (71) der Abdeckvorrichtung (68) in die Befestigungseinrichtung (79) derart eingreift, daß er eine gewisse Ausfederung in die Axialrichtung bezüglich der Befestigungsvorrichtung (79) aufweist.

22. Vorrichtung nach Anspruch 21, **dadurch gekennzeichnet,** daß die Stange (71) eine Verlängerung (89) aufweist, die in die axiale Öffnung eines Rings (88) eingreift, die bezüglich des Rings (88) mit einer gewissen axialen Bewegungsausdehnung und nach unten durch eine Feder (93) gezogen wird, wobei der Ring (88) in Eingriff steht mit der Befestigungseinrichtung (79) der Abdeckvorrichtung auf der oberen Verstärkung (63h).

23. Verfahren zum Begrenzen der Intensität von parasitären Kühlwasserstrahlen nach Anspruch 1, durch Überdecken von ausgerichteten Öffnungen von Verstärkungen der Begrenzung des Nuklearreaktorkerns, **dadurch gekennzeichnet,** daß während einem Stillstand des Reaktors :

– aus dem Behälter (100) des Reaktors innere Ausrüstungen (103), die die Begrenzung des Kerns aufweisen, herausgenommen werden,

– die inneren unteren Einrichtungen (103) auf einer Unterlage (102) abgelegt werden, im Inneren des Reaktorgebäudes,

– ein Führungsrohr (104) in die inneren Ausrüstungen (103) in der axialen Ausrichtung einer Anordnung von ausgerichteten Öffnungen (66) der Verstärkungen (63) der Begrenzung gesetzt wird,

– eine Abdeckvorrichtung (68), die eine Stange (71) und Sätze von Flügeln (72) aufweist, die in Aufnahmen angeordnet sind, entsprechend den Aufnahmen der Verstärkungen, entlang der Länge der Stange (71), in das Führungsrohr (104) eingeführt wird,

– die Abdeckvorrichtung (68) derart geführt wird, um sie in die Öffnung (66) der oberen Verstärkung (63h) der Begrenzung einzuführen, sodann in die Öffnungen (66) der anderen Verstärkungen der Begrenzung durch einfaches Drücken bzw. Schieben der Stange (71), wobei die Befestigung der Abdeckvorrichtung in der Begrenzung durch Querversetzen wenigstens zweier der Sätze der Flügel (72) entlang der Länge der Stange (71) sichergestellt wird.

## Claims

1. Process for limiting the intensity of parasitic jets of cooling water in an operational pressurised- water nuclear reactor, the reactor comprising a core consisting of juxtaposed fuel assemblies and surrounded at its periphery by partitioning comprising vertical plates (5), between which there are interstices constituting passages for the parasitic jets of water through the partitioning (5) towards the interior of the core, and horizontal reinforcement plates (6) disposed at different levels between the vertical plates (5) and a cylindrical core casing (1) having a vertical axis, surrounding the partitioning and defining an annular space (7) around the vertical plates (5), said space containing the reinforcements (6) which are pierced so that the cooling water circulates from bottom to top, both in the core, within the partitioning and within the annular space (7), characterized in that, during a shutdown of the reactor, means for partially closing off (27, 35, 35', 41, 48) at least some of the openings (26) of the reinforcements (6) situated below the upper reinforcements (6a) are introduced and put into position through the openings (25) in the reinforcement (6a) situated at the top, or upper reinforcement, said closing-off devices (27, 35, 35', 41, 48) remaining in place after the reactor has been restarted, in order to increase and regulate the loss of head of the cooling water circulating within the annular space (7).

2. Process according to Claim 1, characterized in that only those openings (26) of the reinforcements situated in the lower part of the partitioning exclusively are partially closed off.

3. Process according to Claim 2, characterized in that only those openings (26) of the reinforcement (6b) situated at the bottom of the partitioning are partially closed off.

4. Process according to any one of Claims 1, 2 and 3, characterized in that the means for partially closing off the openings (26) of the reinforcements (6) of the partitioning are such that the pressure within the annular space (7) of the partitioning is less than the pressure within the core, along the entire height of the core, during the operation of the reactor.

5. Device for limiting the intensity of parasitic jets of cooling water in a pressurized-water nuclear reactor, the reactor comprising a core consisting of juxtaposed fuel assemblies and surrounded at its periphery by partitioning comprising vertical plates (5) between which there are interstices constituting passages for parasitic jets of water through the partitioning, towards the interior of the core, and horizontal reinforcement plates (6) disposed between the vertical plates (5) and a cylindrical core casing (1) having a vertical axis, surrounding the partitioning and forming an annular space (7) around the vertical plates, said space containing the reinforcements (6) which are pierced in such a manner that the cooling water circulates from bottom to top, both in the core, within the partitioning, and within the annular space (7), characterized in that it consists of at least one device (27, 35, 35', 41, 48) for partially closing off at least one opening (26) in a reinforcement (6) of the partitioning.

6. Device according to Claim 5, characterized in that it consists of a rod (27) having a diameter less than the diameter of the openings (26) in the reinforcements (6), said rod being adapted to engage in a plurality of openings (26) in the reinforcements (6), which openings are aligned in a vertical direction.

7. Device according to Claim 6, characterized in that the rod (27) includes a diametrally widened end (27b, 44) adapted to engage in the opening (26) in the reinforcement (6b) situated at the bottom of the partitioning.

8. Device according to Claim 7, characterized in that it includes, at its end opposite the widened portion (27b), a portion (27a) bearing on the upper reinforcement (6a).

9. Device according to Claim 6, characterized in that the widened portion (44) includes a portion bearing on a lower core plate (3) disposed below the partitioning (5).

10. Device according to Claim 6, characterized in that the rod (35, 35') is hollow and comprises centering devices (36, 36') placed on the rod (35, 35') in positions corresponding to the parts of the rod which come to engage in the openings (26) in the reinforcements (6) and a manoeuvring rod (37') which is movable axially within the hollow rod (35, 35') to ensure the diametral expansion of the centering devices (36, 36') by axial displacement.

11. Device according to Claim 10, characterized in that the centering devices (36) consist of fins disposed in radial directions around a part of the rod (35) in which the bore (35a) of the rod has a reduced diameter, the manoeuvring rod (37) comprising a widened portion (38) capable of cooperating with the reduced-diameter portion (35a) of the bore of the rod (35) to achieve radial expansion of the fins (36) within the opening (26).

12. Device according to Claim 10, characterized in that the centering devices consist of fingers (36') mounted so as to pivot on the rod (35'), the manoeuvring rod (37') including a portion (38') for actuating the fingers (36'), for moving them radially outwards within the opening (26).

13. Device according to Claim 5, characterized in that it consists of a tubular bushing (48), the external diameter of which is less than the diameter of the openings (26) of the reinforcements (6) including deformable portions (48a) for clamping thereof within an opening (26) and fixing thereof on the corresponding reinforcement (6).

14. Device according to Claim 6, comprising retaining devices (72), at the location of each one of the openings (66) in the reinforcements (63), consisting of sets of at least two fins (73, 74, 76) disposed radially around a part of the rod (71), characterized in that the fins (76) of at least two sets of fins (72) along the length of the rod (71) have external ends (76a) bearing on the edges of the opening (66) in the corresponding reinforcements (63), the distance of which from the axis of the rod (71) is substantially greater than the radius of the corresponding openings (66), so as to produce a transverse offset of the rod (71) in two different directions, in at least two zones along the length of the rod (71), when this rod is positioned in openings (66) in the reinforcements (63), these openings being aligned in a vertical direction.

15. Device according to Claim 14, characterized in that at least two sets of fins (72) consist of two fins (76) fixed at the periphery of the rod (71) in directions at 90° to one another, the outer end (76a) of which is situated at a distance from the axis of the rod (71) greater than the radius of the opening (66) in which the corresponding set of fins (72) is disposed.

16. Device according to Claim 15, characterized in that it further comprises sets of fins (72) comprising four fins (73, 74) in radial directions in relation to the rod (71) forming between them angles equal to 90°, the outer ends (73a) of which, abutting on the inner contour of the opening (66) in the corresponding reinforcement (63), are at a spacing from the axis of the rod (71) equal to the radius of the opening (66).

17. Device according to either of Claims 15 and 16 characterized in that the fins (76) of at least two sets (72) of fins producing a transverse offset of the axis of the rod (71) are disposed relative to one another in such a manner as to produce a transverse off-set of the rod in opposite directions.

18. Device according to Claim 17 in the case of partitioning comprising eight reinforcements disposed successively along the height of the core, characterized in that each closing-off device includes, at the location of the first, fourth and sixth reinforcements from the bottom, a set of fins (72) not producing any axial offset of the rod (71), at the location of the second and of the fifth reinforcements a set of fins (72) producing a transverse offset of the rod (71) in one direction and going one way and, at the location of the third and seventh reinforcements, a set of fins (72) producing a transverse offset of the rod (71) in the same direction but going the opposite way to the first.

19. Device according to any one of Claims 14 to 18, characterized in that it comprises at its upper end means for fixing (79) in an opening (66) in the upper reinforcement (63h) of the partitioning.

20. Device according to Claim 19, characterized in that the fixing means (79) consists of a plug including a tubular body (80) and a bush (83) which is slidingly mounted in the tubular body (80), carrying pivoting fingers (84) for locking the plug (79) on the upper reinforcement (63h), which are movable between a locking position and an unlocking position, in the axial direction of the plug (79) corresponding to the axial direction of the rod (71) of the closing-off device (68), by virtue of a manoeuvring screw (86) engaging in the sliding bush (83).

21. Device according to Claim 6, characterized in that the upper part (69, 89) of the rod (71) of the closing- off device (68) engages in the fixing means (79) in such a manner as to have some freedom of movement in the axial direction, in relation to the fixing device (79).

22. Device according to Claim 21, characterized in that the rod (71) has an extension (89) engaging in the axial opening of a bush (88), which extension is fixed in relation to the bush (88) with a certain latitude of axial displacement and restored in a downward direction by a spring (93), the bus (88) engaging in the fixing means (79) of the closing-off device on the upper reinforcement (63h).

23. Process for limiting the intensity of parasitic jets of cooling water according to Claim 1 by closing-off aligned openings in reinforcements of the partitioning around the core of a nuclear reactor, characterized in that, during shutdown of the reactor :

– internal equipment (103) including the partitioning around the core is removed from the chamber (100) of the reactor,

– the lower internal equipment (103) is placed on a support (102) inside the reactor building,

– a guide tube (104) is placed in the internal equipment (103), in axial alignment with a set of aligned openings (66) in the reinforcements (63) of the partitioning,

– a closing-off device (68) is introduced into the guide tube (104), comprising a rod (71) and sets of fins (72) placed in locations corresponding to the locations of the reinforcements, along the length of the rod (71),

– the closing-off device (68) is guided, so as to be inserted in the opening (66) in the upper reinforcement (63h) of the partitioning, then in the openings (66) in the other reinforcements of the partitioning, by simply pushing the rod (71), the fixing of the closing-off device in the partitioning being brought about by the transverse offsetting of at least two sets of fins (72), along the length of the rod (71).

FIG.5

FIG.1

FIG.2

FIG.3

FIG.4

FIG.8

FIG.6

FIG.7

FIG.9

FIG.10

FIG.11

FIG.12

FIG.13

FIG.14
FIG.15
FIG.16
FIG.17
FIG.18

# FIG.19

FIG.20A

FIG.20B

25

## FIG.21

## FIG.22

## FIG.23

## FIG.24

FIG.25A

FIG.25B

FIG.26

FIG.27

FIG.28